# EUROPEAN PATENT APPLICATION

(11) **EP 4 668 643 A1**
(43) Date of publication of application: **24.12.2025**
(21) Application number: 24756008.9
(22) Date of filing: 01.02.2024
(51) Int. Cl.: H04L 5/00

(54) **INFORMATION TRANSMISSION METHOD AND APPARATUS, AND DEVICE**

(30) Priority: 16.02.2023 CN 202310168182
(71) Applicant: Datang Mobile Communications Equipment Co., Ltd., Beijing 100085 (CN)
(72) Inventor: HUANG, Qiuping, Beijing 100085 (CN); SU, Yuwan, Beijing 100085 (CN); GAO, Qiubin, Beijing 100085 (CN); FEI, Yongqiang, Beijing 100085 (CN); WANG, Da, Beijing 100085 (CN)
(74) Representative: Studio Torta S.p.A.
(86) International application number: PCT/CN2024/075215
(87) International publication number: WO 2024/169634

(57) **Abstract**

The present disclosure provides an information transmission method and device and apparatus. The information transmission method of the present disclosure includes: receiving a first signaling transmitted by a second communication device; wherein the first signaling is used for monitoring for the target object, and the target object includes a first model and/or a first approach; determining a performance report for the target object based on the first signaling; transmitting the performance report to the second communication device. Optionally, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach.

## Description

### CROSS-REFERENCE TO RELATED APPLICATION

The present application is filed based on and claims the priority of Chinese Application No. 202310168182.2 filed on February 16, 2023, entitled "information transmission method, device and apparatus", the disclosure of which are incorporated in their entireties by reference herein.

### TECHNICAL FIELD

The present disclosure relates to the field of communication technologies, and in particular, to an information transmission method, device and apparatus.

### BACKGROUND

In the New Radio (NR) system, downlink (DL) Type-II codebook can obtain better channel state information (CSI) feedback accuracy. However, the feedback overhead of the DL Type-II codebook is relatively large, and CSI compression feedback based on artificial intelligence (AI)/machine learning (ML) can greatly reduce the overhead of CSI feedback at the same CSI feedback accuracy, or improve CSI feedback accuracy at the same CSI feedback overhead.

Since AI algorithms are obtained based on data training and wireless communication systems are complex and dynamic, AI-based methods (such as CSI compression, CSI prediction, beam management, positioning, etc.) cannot always have good performance. If the AI-based method is not suitable for a current channel condition, but a terminal still performs processing based on the algorithm, a base station will obtain incorrect information, thereby affecting performance. In order to solve this problem, it is necessary to consider performance monitoring of models or methods in the communication system, but there is currently no relevant solution for performance monitoring of models or methods in the communication system.

### SUMMARY

An object of the present disclosure is to provide an information transmission method, device and apparatus, which can achieve performance monitoring of a model or method in a communication system, thereby enhancing the performance of the communication system.

To achieve the foregoing object, one embodiment of the present disclosure provides an information transmission method applied to a first communication device, which includes:
receiving a first signaling transmitted by a second communication device; wherein the first signaling is used for monitoring for the target object, and the target object includes a first model and/or a first approach;
determining a performance report for the target object based on the first signaling;
transmitting the performance report to the second communication device;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

Optionally, the first signaling includes at least one of the following:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

Optionally, the first indication information is activating information or enabling information for the target object.

Optionally, the determining a performance report for the target object based on the first signaling, includes:
based on a target object determined by the identifier information, determining the performance report for the target object.

Optionally, the reference signal resource is a reference signal resource used to monitor for the target object; or,
the second indication information is included in the first information; wherein the first information is one of the following information:
configuration information for the reference signal resource;
indication information for the reference signal resource;
trigger information for the reference signal resource.

Optionally, the determining a performance report for the target object based on the first signaling, includes:
determining the performance report for the target object according to a first reference signal corresponding to the reference signal resource.

Optionally, the determining the performance report for the target object according to a first reference signal corresponding to the reference signal resource, includes:
determining a first CSI based on the first reference signal;
evaluating a performance for the target object according to the first CSI;
determining the performance report for the target object according to the performance for the target object.

Optionally, the determining a performance report for the target object based on the first signaling, includes:
according to a target object determined by the transmission position of the second CSI, determining the performance report for the target object; or,
receiving, at the transmission position of the second CSI, the second CSI corresponding to the target object; determining, based on the received second CSI, the performance report for the target object; or,
based on the transmission position of the second CSI, determining the second CSI corresponding to the target object; based on the received second CSI, determining a performance report for the target object.

Optionally, the determining a performance report for the target object based on the first signaling, includes:
according to a target object determined by a channel carrying the second CSI, determining the performance report for the target object; or,
receiving a second CSI corresponding to the target object on a channel carrying the second CSI; determining the performance report for the target object based on the received second CSI; or,
based on a channel carrying the second CSI, determining a second CSI corresponding to the target object; based on the received second CSI, determining the performance report for the target object.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;

first reference time point information;
information for indicating a first reference resource for the monitoring for the target object, wherein the first reference resource is used to indicate a time point.

Optionally, the determining a performance report for the target object based on the first signaling, includes:
determining the performance report for the target object based on the fifth indication information.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the CSI report is a CSI report for the monitoring for the target object; or,
the seventh indication information and/or the eighth indication information is included in the second information; wherein the second information is one of the following information:
configuration information of CSI report;
indication information of CSI report;
trigger information of CSI report.

Optionally, the determining a performance report for the target object based on the first signaling, includes:
determining third information corresponding to the CSI report, wherein the third information includes a target object, or a reference signal resource, or a reference signal;
determining a performance report for the target object according to the third information.

Optionally, the determining a performance report for the target object based on the first signaling, includes:
receiving a second CSI based on the first signaling, wherein the second CSI corresponds to the first CSI sent by the first communication device;
determining the performance report for the target object according to the received second CSI.

Optionally, the determining a performance report for the target object based on the first signaling, includes:
receiving a second reference signal based on the first signaling, wherein the second reference signal corresponds to the first CSI sent by the first communication device;
determining the performance report for the target object according to the received second reference signal.

Optionally, the determining a performance report for the target object based on the first signaling, includes:
determining a performance report for the target object at a beginning of target time or after the target time, wherein the target time is a moment where the first signaling is located or a moment offset by K first-time units from the moment where the first signaling is located, where K is an integer greater than or equal to 0.

Optionally, the moment where the first signaling is located includes one of the following:
a second-time unit in which the first signaling is transmitted;
a last second-time unit in which the first signaling is transmitted;
a first second-time unit in which the first signaling is transmitted.

Optionally, K is indicated by network, or agreed upon by a protocol, or determined by the first communication device, or determined according to capability of the first communication device.

Optionally, the determining a performance report for the target object based on the first signaling, includes:
starting from the time corresponding to the first reference signal resource used for the monitoring for the target object after the first signaling, determining the performance report for the target object.

Optionally, the first model is used to determine and/or feed back the CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information;
the positioning-related information includes one or more of the following:
location-related information;
time-related information;
angle related information;
energy related information;
line of sight LOS indication information;
non-line-of-sight NLOS indication information.

Optionally, the first model is used for beam management, and the first model is a model for determining beam-related information; the beam-related information includes one or more of the following:
beam identifier ID;
beam quality information;
beam sorting information.

Optionally, the first communication device is a user equipment (UE), and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing the target object.

To achieve the foregoing object, one embodiment of the present disclosure provides an information transmission method, applied to a second communication device, including:
transmitting a first signaling to a first communication device, wherein the first signaling is used for monitoring for the target object, and the target object includes a first model and/or a first approach;
receiving a performance report for the target object determined by the first communication device based on the first signaling;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

Optionally, the first signaling includes information indicating at least one of the following:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

Optionally, the first indication information is activating information or enabling information for the target object.

Optionally, the reference signal resource is a reference signal resource used to monitor for the target object; or,
the second indication information is included in the first information; wherein the first information is one of the following information:
configuration information for the reference signal resource;
indication information for the reference signal resource;
trigger information for the reference signal resource.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, wherein the first reference resource is used to indicate a time point.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the CSI report is a CSI report for monitoring for the target object; or,
the seventh indication information and/or the eighth indication information is included in the second information; wherein the second information is one of the following information:
configuration information of CSI report;
indication information of CSI report;
trigger information of CSI report.

Optionally, the first model is used to determine and/or feed back the CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information;
the positioning-related information includes one or more of the following:
location-related information;
time-related information;
angle related information;
energy related information;
line of sight LOS indication information;
non-line-of-sight NLOS indication information.

Optionally, the first model is used for beam management, and the first model is a model for determining beam-related information; the beam-related information includes one or more of the following:
beam identifier ID;
beam quality information;
beam sorting information.

Optionally, the first communication device is a user equipment (UE), and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing the target object.

To achieve the foregoing object, one embodiment of the present disclosure provides a communication device being a first communication device, including: a memory, a transceiver, and a processor; wherein the memory is used to store program instructions; the transceiver is used to transmit and receive data under the control of the processor; the processor is used to read the program instructions in the memory and perform the following operations:
receiving a first signaling transmitted by a second communication device; wherein the first signaling is used for monitoring for the target object, and the target object includes a first model and/or a first approach;
determining a performance report for the target object based on the first signaling;
transmitting the performance report to the second communication device;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

To achieve the foregoing object, one embodiment of the present disclosure provides an information transmission device, including:
a first receiving unit configured to receive a first signaling transmitted by a second communication device; wherein the first signaling is used for monitoring for the target object, and the target object includes a first model and/or a first approach;
a first processing unit configured to determine a performance report for the target object based on the first signaling;
a first transmitting unit configured to transmit the performance report to the second communication device.

To achieve the foregoing object, one embodiment of the present disclosure provides a processor-readable storage medium, including a computer program stored thereon; wherein the computer program is used to cause a processor to execute the above method.

To achieve the foregoing object, one embodiment of the present disclosure provides a communication device being a second communication device, including: a memory, a transceiver, and a processor; wherein the memory is used to store program instructions; the transceiver is used to transmit and receive data under the control of the processor; the processor is used to read the program instructions in the memory and perform the following operations:
transmitting a first signaling to a first communication device, wherein the first signaling is used for monitoring for the target object, and the target object includes a first model and/or a first approach;
receiving a performance report for the target object determined by the first communication device based on the first signaling;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

To achieve the foregoing object, one embodiment of the present disclosure provides an information transmission device, including:
a second transmitting unit configured to transmit a first signaling to a first communication device, wherein the first signaling is used for monitoring for the target object, and the target object includes a first model and/or a first approach;
a second receiving unit configured to receive a performance report for the target object determined by the first communication device based on the first signaling;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

To achieve the foregoing object, one embodiment of the present disclosure provides a processor-readable storage medium, including a computer program stored thereon; wherein the computer program is used to cause a processor to execute the above method.

According to the above technical solution in the embodiment of the present disclosure, a first signaling transmitted by a second communication device is received, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and then a performance report for the target object is determined based on the first signaling, and finally the performance report is sent to the second communication device. In this way, performance monitoring of the model or method in the communication system can be achieved, thereby improving the performance of the communication system.

### BRIEF DESCRIPTION OF THE DRAWINGS

FIG. 1 is a schematic diagram of a bilateral model for CSI compression;
FIG. 2 is a first schematic diagrams of AI/ML-based positioning;
FIG. 3 is a second schematic diagrams of AI/ML-based positioning;
FIG. 4 is a first flowchart of an information transmission method according to an embodiment of the present disclosure;
FIG. 5 is a second flowchart of an information transmission method according to an embodiment of the present disclosure;
FIG. 6 is a schematic diagram of a first communication device according to an embodiment of the present disclosure;
FIG. 7 is a schematic diagram showing modules of an information transmission device according to an embodiment of the present disclosure;
FIG. 8 is a schematic diagram of a first communication device according to an embodiment of the present disclosure; and
FIG. 9 is a schematic diagram showing modules of an information transmission device according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

In order to facilitate understanding of the solution of the present application, relevant contents involved in the present application are first introduced.

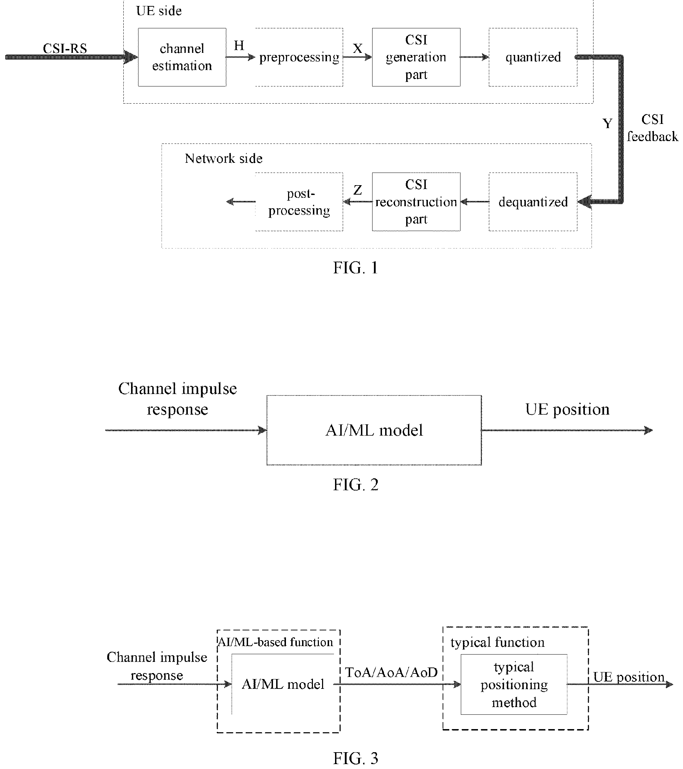

One common AI/ML model used for CSI compression is a bilateral model deployed on two sides, and a schematic diagram of the bilateral model is shown in FIG. 1.

User Equipment (UE) side: a raw signal or a preprocessed channel is compressed by a CSI generation part (also called AI/ML encoder), and then quantized into binary bits for feedback to a base station.

Network side: the binary bits fed back by the UE side are dequantized, and then channel information is restored through a CSI reconstruction part (also called AI/ML decoder). Optionally, the network side (such as the base station) also performs some post-processing operations.

On the UE side, an input of the AI/ML encoder can be a raw channel, or precoding matrix, etc. On the base station side, an output of the AI/ML decoder can also be the raw channel, or the precoding matrix. The input of the AI/ML encoder on the UE side and the output of the AI/ML decoder on the network side can be the same or different types.

Preprocessing the channel on the UE side can reduce the dimensionality of input of the AI/ML encoder or improve the generalization ability of the AI/ML model, thereby reducing the training complexity of AI/ML model, storage overhead, etc. Some common preprocessing operations include time domain truncation, frequency domain sampling, time/space/frequency domain transformation, etc.

In addition to CSI compression feedback, AI/ML has many other application cases, such as positioning, i.e., AI/ML-based positioning, beam management, i.e., AI/ML-based beam management, CSI prediction, i.e., AI/ML-based CSI prediction.

In addition to the bilateral model, a model used for CSI compression can also be a unilateral model, that is, a model deployed only on the UE side or the network side.

One AI/ML model used for AI/ML-based CSI prediction may also be a unilateral model or a bilateral model.

For positioning, traditional positioning approaches mainly include downlink-time difference of arrival (DL-TDOA), uplink-time difference of arrival (UL-TDOA), downlink angle of departure (DL-AoD), uplink-angle of arrival (UL-AoA) and multi-round-trip time (Multi-RTT), etc. These positioning approaches are used to support UE-based positioning, UE-assisted/LMF-based positioning and NG-RAN node assisted positioning.

Specifically, for the UE-based positioning, the positioning solution process is completed on the UE side, that is, the UE measures a downlink positioning reference signal (DL-PRS) and solves the UE's position according to a measurement result based on the traditional positioning approach.

For the UE-assisted/LMF-based positioning, the positioning solution process is completed on a location management function (LMF) device of the core network. At this point, the UE measures a downlink positioning reference signal DL-PRS, and the UE transmits a time measurement value or angle measurement value obtained based on the measurement result to the LMF through lightweight presentation protocol (LPP) signaling. The LMF solves the UE's position according to the received time measurement value or angle measurement value based on the traditional positioning approach.

For the NG-RAN node assisted positioning, the positioning solution process is completed on the LMF device of the core network. At this point, the gNB measures an uplink sounding reference signal (UL-SRS), and the gNB transmits a time measurement value or angle measurement value obtained based on a measurement result to the LMF through a NR positioning protocol ANRPPa signaling. The LMF solves the UE's position according to the received time measurement value or angle measurement value based on the traditional positioning approach.

Sub-use cases of AI/ML-based positioning include: direct AI/ML positioning and AI/ML assisted positioning.

For the direct AI/ML positioning, an output of this AI/ML model is UE position, and its input can be committed information rate (CIR), reference signal receiving power (RSRP) or other possible channel observation result, as shown in FIG. 2.

For the AI/ML assisted positioning, an output of the AI/ML model is a new measurement value or an enhancement of an existing measurement value. Here, the measurement value may be a time-related measurement value, or an angle-related measurement value, or an energy-related measurement value, or a LOS/NLOS indicator. In addition, the new measurement value may be ToA, etc. Based on the output of the AI/ML model, the UE position may be obtained through a traditional triangulation method, as shown in FIG. 3.

Since AI algorithms are obtained based on data training and wireless communication systems are complex and dynamic, AI-based methods (such as CSI compression, CSI prediction, beam management, positioning, etc.) cannot always have good performance. If the AI-based method is not suitable for a current channel condition, but a terminal still performs processing based on the algorithm, a base station will obtain incorrect information, thereby affecting performance. In order to solve this problem, it is necessary to consider performance monitoring of models or methods in the communication system, but there is currently no relevant solution for performance monitoring of models or methods in the communication system.

In order to solve the above problems, embodiments of the present application provide information transmission methods, devices and apparatus. Optionally, the method and the device are based on the same application concept. Since principles of solving the problems by the method and the device are similar, implementation of the device and the method can refer to each other, and repeated parts will not be repeated.

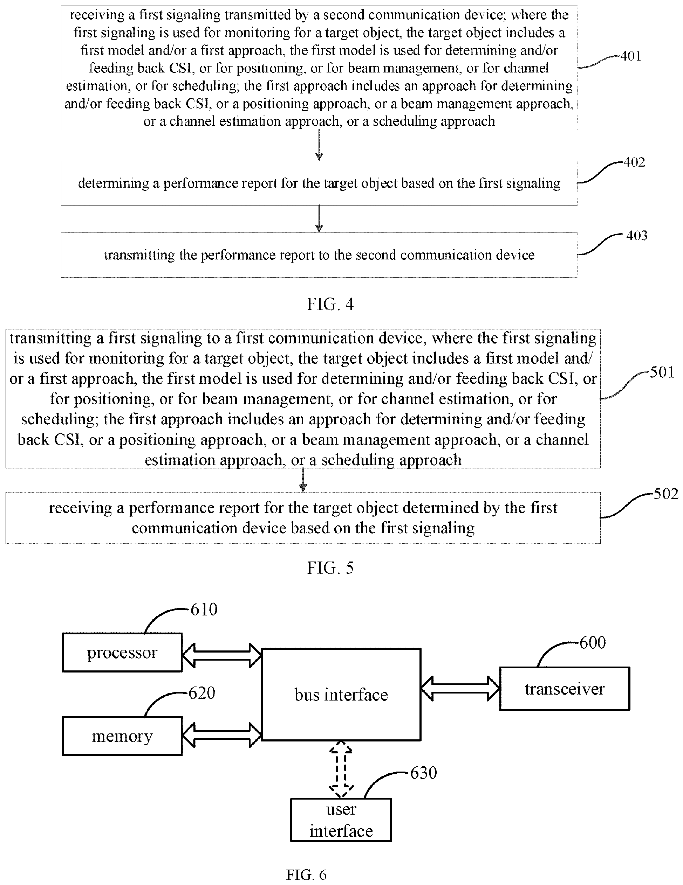

As shown in FIG. 4, which is a flow chart of an information transmission method provided in an embodiment of the present disclosure. The method is applied to a first communication device, and includes:
Step 401: receiving a first signaling transmitted by a second communication device; where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach.

Optionally, the first communication device is a terminal, and the second communication device is a base station or a third communication device; or, the first communication device is a third communication device, and the second communication device is a base station; or, the first communication device is a base station, and the second communication device is a third communication device.

Here, the third communication device is a LMF entity or a device specifically used for monitoring or management for the target object.

It is to be noted that the monitoring of target object is applicable to scenarios with more than or equal to one target object, that is, the first signaling, i.e., this one message, can instruct the first communication device to perform performance monitoring of one target object, or the first signaling, i.e., this one message, can instruct the first communication device to perform performance monitoring of multiple target objects.

Optionally, when the target object is a first model, the first model includes but is not limited to an AI model, an ML model, a neural network model, a data-driven technology model, etc. This embodiment is described by taking an AI model as an example.

Here, the first signaling may be directed to a specific target object, such as a specific AI model, for example, instructing the first communication device (such as UE) to perform performance monitoring of a first AI model; it may also be directed to a certain function, for example, instructing the first communication device (such as UE) to perform model monitoring of CSI feedback based on AI; it may also be directed to a certain scenario, for example, instructing the first communication device (such as UE) to perform model monitoring of CSI feedback based on AI in a certain scenario.

Optionally, the first model is used to determine and/or feed back CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information.

The positioning-related information includes one or more of the following:
location-related information;
time-related information;
angle related information;
energy related information;
line of sight LOS indication information;
non-line-of-sight NLOS indication information.

Optionally, the first model is used for beam management, and the first model is a model for determining beam-related information; the beam-related information includes one or more of the following:
beam identifier ID;
beam quality information;
beam sorting information.

Step 402: determining a performance report for the target object based on the first signaling.

In an optional implementation, the step 402 may specifically include: evaluating performance for the target object based on the first signaling, and determining the performance report for the target object based on the performance.

Optionally, an indicator for evaluating performance for the target object includes but is not limited to:
precision indicator, such as squared generalized cosine similarity (SGCS), generalized cosine similarity (GCS), normalized mean square error (MMSE), mean square error (MSE), etc.;
system performance indicator, such as block error rate (BLER), throughput, hypothetical BLER, hypothetical throughput, Acknowledgement (ACK), non-acknowledgement (NACK), etc.;
indicator corresponding to distribution such as mean, mean square error, etc.;
other performance indicator, such as reference signal received power (RSRP), reference signal received quality (RSRQ), signal-to-interference-noise ratio (SINR), etc.

Step 403: transmitting the performance report to the second communication device.

According to the information transmission method of the embodiment of the present disclosure, by receiving a first signaling transmitted by a second communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and then determining a performance report for the target object based on the first signaling, and finally transmitting the performance report to the second communication device, performance monitoring of the model or method in the communication system can be achieved, thereby improving the performance of the communication system.

Optionally, the first signaling includes at least one of the following information:
(1) first indication information used to instruct the first communication device to perform the monitoring for the target object.

Optionally, in the solution (1), the first indication information is activation information or enabling information for the target object. That is, information for activating or enabling the target object (for example, the first signaling is activation signaling or enabling signaling) can be used to instruct the first communication device to monitor for the target object.

In this solution, the step 402 may specifically include: based on the first signaling, the monitoring for the target object to obtain the performance report for the target object.

If the first signaling is directed to a first target object (i.e., a specific target object), for example, when the first signaling is used to instruct the first communication device to monitor the first AI/ML model, the first signaling further includes information for indicating the first target object. The information for indicating the first target object may include but is not limited to:
index (ID) of the first target object;
reference signal (RS) indication information corresponding to the first target object (e.g., information for indicating ID of RS corresponding to the first AI/ML model; information for indicating ID of RS corresponding to a first CSI feedback approach);
RS resource indication information corresponding to the first target object (e.g., information for indicating RS resource ID corresponding to the first AI/ML model; information indicating the RS resource ID corresponding to the first CSI feedback approach);
RS resource set indication information corresponding to the first target object (e.g., information for indicating RS resource set ID corresponding to the first AI/ML model; information for indicating RS resource set ID corresponding to the first CSI feedback approach);
CSI report indication information corresponding to the first target object (e.g., information for indicating CSI report ID corresponding to the first AI/ML model; information for indicating the CSI report ID corresponding to the first CSI feedback approach);
CSI configuration indication information corresponding to the first target object (for example, information for indicating CSI config ID corresponding to the first AI/ML model; information for indicating CSI config ID corresponding to the first CSI feedback approach).

(2) identifier information. Specifically, the identifier information includes but is not limited to a target object ID, function ID and scenario ID. The functions involved may include: CSI compression feedback; CSI prediction; positioning; beam management; resource scheduling. The scenarios involved may include: indoor; outdoor; factory; city, etc.

(3) second indication information, used to indicate a reference signal resource.

Optionally, the reference signal resource is a reference signal resource used to monitor for the target object, that is, the reference signal resource may be a reference signal resource specifically used to monitor for the target object.

Alternatively, the second indication information is included in the first information; where the first information is one of the following information:
configuration information of reference signal resource;
indication information of reference signal resource;
trigger information of reference signal resource.

For example, the configuration/indication/trigger information for the reference signal resource includes an identifier or an information field for indicating that the reference signal resource is used to monitor for the target object.

If the first communication device is a UE and the second terminal device is a base station, the base station may also configure a dedicated reference signal resource used to monitor for the target object.

(4) third indication information, used to indicate transmission position of a second CSI.

Optionally, the second CSI is CSI for the monitoring for the target object.

(5) fourth indication information, used to indicate a channel carrying the second CSI.

(6) fifth indication information, used to indicate a first time corresponding to the monitoring for the target object.

(7) sixth indication information, used to indicate a second time corresponding to the performance report for the target object.

(8) seventh indication information, used to indicate a CSI report corresponding to the monitoring for the target object.

(9) eighth indication information, used to instruct the first communications device to transmit a CSI report corresponding to the monitoring for the target object.

The CSI report in (8) or (9) is a CSI report used to monitor for the target object; that is, the CSI report can be a dedicated CSI report used to monitor for the target object.

Alternatively, the seventh indication information and/or the eighth indication information is included in the second information; where the second information is one of the following information:
configuration information for CSI report;
indication information for CSI report;
trigger information for CSI report.

For example, the configuration/indication/trigger information for the CSI report includes information for indicating that the CSI report corresponds to the monitoring for the target object (i.e., indicating that relevant information of the CSI report is used to perform the monitoring for the target object).

Specifically, the configuration/indication/trigger information for the CSI report includes an identifier or information field for indicating that the relevant information of the CSI report (such as reference signal corresponding to the CSI report/reference signal resource corresponding to the CSI report/CSI feedback approach corresponding to the CSI report) is used for the monitoring for the target object. At this point, it can be considered that the first signaling includes the configuration/indication/trigger information for the CSI report.

(10) Ninth indication information, used to indicate one or more of content, format and reporting mode of the performance report for the target object.

Optionally, the format of the performance report includes one or more of: an encoding mode of the performance report, and information fields included in the performance report.

In the solution (10), the first communication device may determine the content of the performance report for the target object according to the ninth indication information; and the performance report sent to the second communication device includes the content. Alternatively, the first communication device may determine the format of the performance report for the target object according to the ninth indication information; and transmit the performance report to the second communication device based on the format.

Optionally, the above information (1) to (10) is indicated by one first signaling; or at least two of the above information (1) to (10) are indicated by multiple first signalings (i.e., different signalings) (for example, one is indicated by a medium access control control element (MAC CE), and the other is indicated by an RRC; for another example, one is indicated by one MAC CE, and the other is indicated by another MAC CE; for another example, one is indicated by an RRC parameter, and the other is indicated by another RRC parameter).

Optionally, the first signaling is one or more of RRC signaling, MAC-CE signaling, and downlink control information (DCI) signaling.

In an optional implementation, the step 402 may include:
determining a performance report for the target object based on a target object determined according to the identifier information.

This step specifically includes: determining the target object corresponding to the identifier information according to the identifier information; the monitoring for the target object to obtain a performance report for the target object.

Optionally, the identifier information is a target object ID; in case that the target object ID is the target object ID corresponding to the performance report, accordingly, the first communication device monitors the target object corresponding to the target object ID, determines the performance report for the target object, and transmits it to the second communication device.

Optionally, when the identifier information is a target object ID and in case that the target object ID is a candidate target object ID, the first communication device monitors one or more candidate target objects corresponding to the candidate target object ID, determines performance reports of the one or more target objects, and transmits them to the second communication device.

Optionally, the identifier information is a function ID, and in case that the function ID is a function ID corresponding to the performance report, accordingly, the first communication device monitors the target object corresponding to the function ID, determines the performance report for the target object, and transmits it to the second communication device.

Optionally, when the identifier information is a function ID, and in case that the function ID is a candidate function ID, the first communication device monitors one or more target objects corresponding to one or more candidate functions (corresponding to the corresponding function IDs), determines performance reports corresponding to the one or more target objects, and transmits them to the second communication device.

Here, the function ID may also be referred to as a type ID, a scenario ID, etc. It may be used to indicate a type and/or an application scenario of function, etc. Some examples of the function include: CSI compression feedback; CSI prediction; positioning; beam management; resource scheduling; indoor/outdoor; factory; city, etc.

It is to be noted that one or more of content, format, and reporting mode of performance reports corresponding to target objects corresponding to different function IDs may be different. The first communication device can determine one or more of the content, format, and reporting mode of the performance report for the target object based on the function ID.

Optionally, the first communication device determines the content included in the performance report based on the function ID. That is, there are at least two function IDs, and contents included in performance reports corresponding to the at least two function IDs are different. For example, content included in a performance report corresponding to CSI compression feedback is different from that included in a performance report corresponding to positioning.

Optionally, the first communication device determines a reporting mode of the performance report based on the function ID. That is, there are at least two function IDs, and reporting modes of performance reports corresponding to the at least two function IDs are different. For example, reporting modes of the performance report corresponding to CSI compression feedback and the performance report corresponding to positioning are different.

Optionally, the first communication device determines the format of the performance report based on the function ID. That is, there are at least two function IDs, and formats of the performance reports corresponding to the at least two function IDs are different. For example, the format of the performance report corresponding to CSI compression feedback is different from that of the performance report corresponding to positioning.

Of course, the present disclosure is also applicable to scenarios where content/format/reporting mode of performance reports corresponding to different function IDs are the same. In this case, the first communication device does not need to determine the content/format/reporting mode of the performance report based on the function ID.

In an optional implementation, the above step 402 may include:
I) determining a performance report for the target object according to a first reference signal corresponding to the reference signal resource.

Further, the above step I) may include:
determining a first CSI based on the first reference signal; evaluating the performance for the target object according to the first CSI; and determine a performance report for the target object according to the performance for the target object.

Here, the reference signal resource may be a reference signal resource indicated by a second communication device (such as a base station) for monitoring for the target object. That is, transmitting the first indication information to the first communication device means that signaling for monitoring for the target object is sent to the first communication device, thereby triggering the first communication device to monitor for the target object. At this point, the determining a performance report for the target object according to the first reference signal corresponding to the reference signal resource, specifically including:
receiving a first reference signal corresponding to the reference signal resource; and determining a performance report for the target object based on the received first reference signal.

In an optional implementation, the above step 402 may specifically include:
(1) determining a target object according to a transmission position of the second CSI, and determining a performance report for the target object.
   Specifically, according to the transmission position of the second CSI, a target object corresponding to the transmission position is determined; the target object is monitored to obtain a performance report for the target object.
   Or,
(2) receiving, at a transmission position of a second CSI, second CSI corresponding to the target object; and determining, based on the received second CSI, a performance report for the target object;
   or,
   (iii) determining, based on a transmission position of a second CSI, the second CSI corresponding to the target object; and determining, based on the received second CSI, a performance report for the target object.

In an optional implementation, the above step 402 may specifically include:
A) determining a performance report for the target object according to a channel carrying the second CSI.

Specifically, according to the channel carrying the second CSI, a target object corresponding to the channel carrying the second CSI is determined; the target object is monitored to obtain a performance report for the target object.

Or,
B) receiving a second CSI corresponding to the target object on a channel carrying the second CSI; determining a performance report for the target object based on the received second CSI; or,
C) determining, based on a channel carrying the second CSI, the second CSI corresponding to the target object; and determining, based on the received second CSI, a performance report for the target object.

In an optional implementation, the above step 402 may include:
determining a performance report for the target object based on fifth indication information.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, where the first reference resource is used to indicate a time point.

This step may specifically include: determining time related to the monitoring for the target object according to the fifth indication information; the monitoring for the target object based on the time related to the monitoring for the target object, and obtaining a performance report for the target object.

For example, the first communication device determines the starting time of the monitoring for the target object according to the information for indicating the starting time corresponding to the monitoring for the target object; the first communication device monitors the target object from the starting time or after the starting time.

For another example, the first communication device determines the end time of the monitoring for the target object based on information for indicating the end time corresponding to the monitoring for the target object; the first communication device monitors the target object before the end time and stops monitoring after the end time.

For another example, the first communication device determines a period for the monitoring for the target object according to information for indicating a period corresponding to the monitoring for the target object; the first communication device monitors the target object according to the period.

In an optional embodiment, the fifth indication information includes first reference time point information, and the first reference time point information includes a first reference time point. Accordingly, the above step 402 may include:
determining a performance report for the target object according to a signal received at the first reference time point; or,
determining a performance report for the target object according to a signal received before the first reference time point, or,
determining a performance report for the target object according to a signal received after the first reference time point.

In another optional embodiment, the fifth indication information includes first reference time point information, where the first reference time point information includes two reference time points, one reference time point is used to indicate the starting time of the monitoring for the target object, and the other reference time point is used to indicate the end time of the monitoring for the target object.

In another optional embodiment, the fifth indication information includes information for indicating a first reference resource for the monitoring for the target object, where the first reference resource is used to indicate a time point. Accordingly, the above step 402 may include:
the monitoring for the target object based on the first reference resource to obtain a performance report for the target object; or
the monitoring for the target object based on reference resources starting from the first reference resource to obtain a performance report for the target object; or
the monitoring for the target object based on reference resources after the first reference resource to obtain a performance report for the target object.

In an optional implementation, the above step 403 may include:
based on the sixth indication information, transmitting a performance report for the target object to the second communication device.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

In an optional embodiment, the sixth indication information includes second reference time point information, and the second reference time point information includes a second reference time point. Accordingly, the above step 403 may include:
transmitting a performance report for the target object to the second communication device at the second reference time point; or,
transmitting a performance report for the target object to the second communication device before the second reference time point, or,
transmitting a performance report for the target object to the second communication device after the second reference time point.

In another optional embodiment, the sixth indication information includes second reference time point information, where the second reference time point information includes two reference time points, one reference time point is used to indicate starting time of transmitting the performance report; and the other reference time point is used to indicate end time of transmitting the performance report.

In an optional embodiment, the above step 402 may include:
determining third information corresponding to the CSI report, where the third information includes a target object, or a reference signal resource, or a reference signal;
determining a performance report for the target object according to the third information.

It is to be noted that the CSI report corresponding to the monitoring for the target object may include one or more of the following information: target object ID; function ID; CSI feedback mode (such as codebook-based CSI feedback mode, AI-based CSI feedback mode, etc.).

In an optional implementation, the above step 402 may include:
receiving a second CSI based on the first signaling, where the second CSI corresponds to the first CSI sent by the first communication device; and according to the received second CSI, determining a performance report for the target object.

This implementation is more suitable for the first communication device being a terminal, the second communication device being a base station, and the base station transmitting a recovered CSI. The first communication device receives a second CSI corresponding to the first CSI based on the first signaling; and monitors the target object according to the received second CSI to obtain a performance report for the target object.

It is to be noted that the first CSI is determined by the first communication device based on the target object, and the second CSI is determined by the second communication device based on the first CSI (for example, the second CSI is determined by the second communication device based on the first CSI and the target object corresponding to the target object used by the first communication device for determining the first CSI).

Optionally, the second CSI corresponds to the first CSI in a one-to-one manner. Optionally, the first CSI and the second CSI are in a one-to-many relationship; that is, one first CSI corresponds to multiple second CSIs.

Optionally, the signaling with the second CSI sent by the second communication device includes indication information of an identifier of the first CSI corresponding to the second CSI. The indication information may explicitly indicate: a first CSI identifier; the indication information may also be an implicit indication: indicating the first CSI corresponding to the second CSI through an identifier of RS resource corresponding to the first CSI or an identifier of the CSI report.

Optionally, the second communication device transmits one second CSI at one time, and multiple second CSIs are sent through multiple signalings.

Optionally, the second communication device transmits multiple second CSIs at one time, and each second CSI corresponds to one first CSI.

Optionally, there are multiple second CSIs, and the second communication device transmits the multiple second CSIs through an identical signaling. The multiple second CSIs correspond to the multiple first CSIs in a one-to-one manner.

Specifically, correspondence between the first CSI and the second CSI may be determined based on bit sequence/information field sequence corresponding to the second CSI in the signaling transmitted by the second communication device.

In an optional implementation, the above step 402 may include:
receiving a second reference signal based on the first signaling, where the second reference signal corresponds to the first CSI sent by the first communication device; and determining a performance report for the target object according to the received second reference signal.

This implementation is more suitable for the first communication device being a terminal, the second communication device being a base station, and the base station transmitting a precoded channel state information reference signal (CSI-RS) (also referred to as beamformed CSI-RS). The first communication device receives a second reference signal corresponding to the first reference signal based on the first signaling, and monitors the target object according to the received second reference signal to obtain a performance report for the target object.

It is to be noted that the first CSI is determined by the first communication device based on the target object, and the second reference signal is determined by the second communication device based on the first CSI (for example, beamforming of the second reference signal is determined by the second communication device based on the first CSI and a target object corresponding to the target object used by the first communication device for determining the first CSI).

In an optional implementation, the above step 402 may include:
determining a performance report for the target object at beginning of target time or after target time, where the target time is a moment when the first signaling is located or a time unit offset from a moment where the first signaling is located by K first-time unit, where K is an integer greater than or equal to 0.

Here are some examples for illustration.

In one example, it is assumed that a moment where the first signaling is located is a slot n, and the target time is the moment where the first signaling is located; then a performance report for the target object is determined at a beginning of the slot n, or the performance report for the target object is determined after the slot n.

In another example, it is assumed that a moment where the first signaling is located is a slot n, the target time is a time unit offset by K first-time units from the moment where the first signaling is located is a slot, that is, slot n+K; then a performance report for the target object is determined at beginning of the slot n+K or after the beginning of the slot n+K.

Optionally, the moment where the first signaling is located includes one of the following:
a second-time unit in which the first signaling is transmitted;
a last second-time unit in which the first signaling is transmitted;
a first second-time unit in which the first signaling is transmitted.

Optionally, K is indicated by the network, or agreed upon by a protocol, or determined by the first communication device, or determined according to capability of the first communication device.

It is to be noted that units of the first-time unit and the second-time unit are the same or different;

The unit of the first-time unit may be a slot, a symbol, a subframe, a frame, etc.

The unit of the second-time unit may be a slot, a symbol, a subframe, a frame, etc.

In an optional implementation, the above step 402 may include:
starting from the time corresponding to the first reference signal resource used for the monitoring for the target object after the first signaling, determining a performance report for the target object.

Here, the reference signal resource may be a CSI-RS resource or a PRS resource, etc.

According to the information transmission method of the embodiment of the present disclosure, by receiving a first signaling transmitted by a second communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and then determining a performance report for the target object based on the first signaling, and finally transmitting the performance report to the second communication device, performance monitoring of the model or method in the communication system can be achieved, thereby improving the performance of the communication system.

As shown in FIG. 5, which is a flow chart of an information transmission method provided in an embodiment of the present disclosure. The method is applied to a second communication device and includes:

Step 501: transmitting a first signaling to a first communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach.

Optionally, the first communication device is a terminal, and the second communication device is a base station or a third communication device; or, the first communication device is a third communication device, and the second communication device is a base station; or, the first communication device is a base station, and the second communication device is a third communication device.

Here, the third communication device is a LMF entity or a device specifically used for monitoring or management for the target object.

Optionally, when the target object is a first model, the first model includes an AI model, an ML model.

Here, the first signaling may be directed to a specific target object, such as a specific AI model, for example, instructing the first communication device (such as UE) to perform performance monitoring of a first AI model; it may also be directed to a certain function, for example, instructing the first communication device (such as UE) to perform model monitoring of CSI feedback based on AI; it may also be directed to a certain scenario, for example, instructing the first communication device (such as UE) to perform model monitoring of CSI feedback based on AI in a certain scenario.

Optionally, the first model is used to determine and/or feed back CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information.

The positioning-related information includes one or more of the following:
location-related information;
time-related information;
angle related information;
energy related information;
Line of sight LOS indication information;
Non-line-of-sight NLOS indication information.

Optionally, the first model is used for beam management, and the first model is a model for determining beam-related information; the beam-related information includes one or more of the following:
beam identifier ID;
beam quality information;
beam sorting information.

Step 502: receiving a performance report for the target object determined by the first communication device based on the first signaling.

Optionally, the first signaling includes at least one of the following information:
(1) first indication information used to instruct the first communication device to perform the monitoring for the target object.

Optionally, in the solution (1), the first indication information is activation information or enabling information for the target object. That is, information for activating or enabling the target object (for example, the first signaling is activation signaling or enabling signaling) can be used to instruct the first communication device to monitor for the target object.

If the first signaling is directed to a first target object (i.e., a specific target object), for example, when the first signaling is used to instruct the first communication device to monitor the first AI/ML model, the first signaling further includes information for indicating the first target object. The information for indicating the first target object may include but is not limited to:
index (ID) of the first target object;
reference signal (RS) indication information corresponding to the first target object (e.g., information for indicating ID of RS corresponding to the first AI/ML model; information for indicating ID of RS corresponding to a first CSI feedback approach);
RS resource indication information corresponding to the first target object (e.g., information for indicating RS resource ID corresponding to the first AI/ML model; information indicating the RS resource ID corresponding to the first CSI feedback approach);
RS resource set indication information corresponding to the first target object (e.g., information for indicating RS resource set ID corresponding to the first AI/ML model; information for indicating RS resource set ID corresponding to the first CSI feedback approach);
CSI report indication information corresponding to the first target object (e.g., information for indicating CSI report ID corresponding to the first AI/ML model; information for indicating the CSI report ID corresponding to the first CSI feedback approach);
CSI configuration indication information corresponding to the first target object (for example, information for indicating CSI config ID corresponding to the first AI/ML model; information for indicating CSI config ID corresponding to the first CSI feedback approach).

(2) identifier information. Specifically, the identifier information includes but is not limited to a target object ID, function ID and scenario ID. The functions involved may include: CSI compression feedback; CSI prediction; positioning; beam management; resource scheduling. The scenarios involved may include: indoor; outdoor; factory; city, etc.

Here, the function ID may also be referred to as a type ID, a scenario ID, etc. It may be used to indicate a type and/or an application scenario of function, etc. Some examples of the function include: CSI compression feedback; CSI prediction; positioning; beam management; resource scheduling; indoor/outdoor; factory; city, etc.

It is to be noted that one or more of content, format, and reporting mode of performance reports corresponding to target objects corresponding to different function IDs may be different. The first communication device can determine one or more of the content, format, and reporting mode of the performance report for the target object based on the function ID.

(3) second indication information, used to indicate a reference signal resource.

Optionally, the reference signal resource is a reference signal resource used to monitor for the target object, that is, the reference signal resource may be a reference signal resource specifically used to monitor for the target object.

Alternatively, the second indication information is included in the first information; where the first information is one of the following information:
configuration information of reference signal resource;
indication information of reference signal resource;
trigger information of reference signal resource.

For example, the configuration/indication/trigger information for the reference signal resource includes an identifier or an information field for indicating that the reference signal resource is used to monitor for the target object.

If the first communication device is a UE and the second terminal device is a base station, the base station may also configure a dedicated reference signal resource used to monitor for the target object.

(4) third indication information, used to indicate transmission position of a second CSI.

Optionally, the second CSI is CSI for the monitoring for the target object.

(5) fourth indication information, used to indicate a channel carrying the second CSI.

(6) fifth indication information, used to indicate a first time corresponding to the monitoring for the target object.

(7) sixth indication information, used to indicate a second time corresponding to the performance report for the target object.

(8) seventh indication information, used to indicate a CSI report corresponding to the monitoring for the target object.

(9) eighth indication information, used to instruct the first communications device to transmit a CSI report corresponding to the monitoring for the target object.

The CSI report in (8) or (9) is a CSI report used to monitor for the target object; that is, the CSI report can be a dedicated CSI report used to monitor for the target object.

Alternatively, the seventh indication information and/or the eighth indication information is included in the second information; where the second information is one of the following information:
configuration information for CSI report;
indication information for CSI report;
trigger information for CSI report.

For example, the configuration/indication/trigger information for the CSI report includes information for indicating that the CSI report corresponds to the monitoring for the target object (i.e., indicating that relevant information of the CSI report is used to perform the monitoring for the target object).

Specifically, the configuration/indication/trigger information for the CSI report includes an identifier or information field for indicating that the relevant information of the CSI report (such as reference signal corresponding to the CSI report/reference signal resource corresponding to the CSI report/CSI feedback approach corresponding to the CSI report) is used for the monitoring for the target object. At this point, it can be considered that the first signaling includes the configuration/indication/trigger information for the CSI report.

(10) Ninth indication information, used to indicate one or more of content, format and reporting mode of the performance report for the target object.

Optionally, the format of the performance report includes one or more of: an encoding mode of the performance report, and information fields included in the performance report.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, where the first reference resource is used to indicate a time point.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the above information (1) to (10) is indicated by one first signaling; or at least two of the above information (1) to (10) are indicated by multiple first signalings (i.e., different signalings) (for example, one is indicated by a medium access control control element (MAC CE), and the other is indicated by an RRC; for another example, one is indicated by one MAC CE, and the other is indicated by another MAC CE; for another example, one is indicated by an RRC parameter, and the other is indicated by another RRC parameter).

Optionally, the first signaling is one or more of RRC signaling, MAC-CE signaling, and downlink control information (DCI) signaling.

Optionally, the performance report includes information for indicating performance of the first model and/or the first approach, such as information for indicating performance indicators.

According to the information transmission method of the embodiment of the present disclosure, a first signaling is sent to a first communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and a performance report for the target object determined by the first communication device based on the first signaling is received. In this way, performance monitoring of the model or method in the communication system can be achieved, thereby improving the performance of the communication system.

### Embodiment 1

The first communication device is a user equipment (UE), and the second communication device is a base station.

At S11, the base station transmits a first signaling, where the first signaling instructs the UE to perform model monitoring.

Here, the model is an AI model or an ML model.
At S12, the UE receives the first signaling;
At S13, the UE transmits a performance report based on the first signaling.

Specifically, the step S13 includes that: the UE performs model monitoring based on the first signaling, and transmits a performance report corresponding to the model monitoring.

Furthermore, the UE performing model monitoring based on the first signaling, includes: the UE evaluates performance of the model based on the first signaling; correspondingly, transmitting a performance report corresponding to the model monitoring includes: transmitting a performance report determined based on the performance.

At S14, the base station receives the performance report.

Optionally, the first signaling does not indicate a specific AI/ML model, and the UE determines which AI/ML model to monitor and which AI/ML model's performance report to transmit.

Optionally, the first signaling includes at least one of the following information:
(1) instructing the UE to monitor a first AI/ML model;

Correspondingly, the step S13 may specifically include that: the UE performs monitoring of the first AI/ML model based on the first signaling, and transmits a performance report based on the monitoring.

Optionally, information for activating/enabling the first AI/ML model may be used to instruct the UE to monitor the first AI/ML model. For example, in response to a signaling for activating/enabling the first AI/ML model, the UE monitors the first AI/ML model (the base station activates/enabling the first AI/ML model for the UE, which means instructing the UE to monitor the first AI/ML model and feedback a performance report).

In the solution (1), the performance report may be a performance report corresponding to the first AI/ML model. That is, the first signaling indicates which AI/ML model the UE monitors, and the UE feeds back the performance report corresponding to which AI/ML model.

Specifically, the first signaling may include information for indicating the first AI/ML model, for example:
index (ID) of the first AI/ML model;
RS indication information corresponding to the first AI/ML model (e.g., information for indicating ID of RS corresponding to the first AI/ML model);
RS resource indication information corresponding to the first AI/ML model (e.g., information for indicating RS resource ID corresponding to the first AI/ML model);
RS resource set indication information corresponding to the first AI/ML model (e.g., information for indicating RS resource set ID corresponding to the first AI/ML model);
CSI report indication information corresponding to the first AI/ML model (e.g., information for indicating a CSI report ID corresponding to the first AI/ML model);
CSI configuration indication information corresponding to the first AI/ML model (e.g., information for indicating CSI config ID corresponding to the first AI/ML model), etc.

The first AI/ML model may be one or more AI/ML models.

(2) ID information, which may be a model ID, a function ID, a scenario ID, etc.

Optionally, the model ID is an ID corresponding to the performance report.

Correspondingly, the step S 13 specifically includes that: the UE monitors the AI/ML model corresponding to the model ID, and feeds back a performance report corresponding to the AI/ML model.

Optional, the model ID is a candidate model ID.

Correspondingly, the step S 13 specifically includes that: the UE monitors one or more of the one or more candidate AI/ML models corresponding to these IDs, and reports performance reports corresponding to one or more AI/ML models among the AI/ML models monitored by the UE.

Optionally, the function ID is a function ID corresponding to the performance report.

Correspondingly, the step S 13 specifically includes that: the UE monitors the AI/ML model corresponding to the function ID, and feeds back a performance report corresponding to the AI/ML model corresponding to the function ID.

Optionally, the function ID is candidate function IDs.

Correspondingly, the step S 13 specifically includes that: the UE monitors one or more of one or more candidate functions corresponding to these IDs, and reports performance reports corresponding to one or more of the functions monitored by the UE.

The function ID can also be called type ID, scenario ID, etc. It can be used to indicate the type and/or application scenario of function, etc. Some examples of functions are: CSI compression feedback; CSI prediction; positioning; beam management; resource scheduling; indoor/outdoor; factory; city, etc.

Optionally, the UE determines the content included in the performance report based on the function ID. That is, there are at least two function IDs, and contents included in the performance reports corresponding to at least two function IDs is different. For example, the content included in the performance report corresponding to CSI compression feedback is different from that included in the performance report corresponding to positioning.

Optionally, the UE determines the reporting mode of the performance report based on the function ID. That is, there are at least two function IDs, and the reporting modes of the performance reports corresponding to at least two function IDs are different. For example, the reporting mode of the performance report corresponding to CSI compression feedback is different from that of the performance report corresponding to positioning.

Optionally, the UE determines the format of the performance report based on the function ID. That is, there are at least two function IDs, and the formats of the performance reports corresponding to at least two function IDs are different. For example, the format of the performance report corresponding to CSI compression feedback is different from that of the performance report corresponding to positioning.

Of course, the present disclosure is also applicable to scenarios where the content/format/reporting mode of performance reports corresponding to different function IDs are the same. In this case, the UE does not need to determine the content/format/reporting mode of the performance report based on the function ID.

(3) Information for indicating reference signal resources corresponding to model monitoring

Optionally, the first signaling indicates a first reference signal resource used for model monitoring. The UE performs model monitoring based on a reference signal corresponding to the first reference signal resource.

The first reference signal resource may be a CSI-RS resource, a TRS resource, etc.

The base station may also configure a dedicated reference signal resource used for model monitoring. That is, there is a type of reference signal resource, which is a dedicated reference signal resource used for model monitoring. That is, the first reference signal resource is a dedicated reference signal resource.

Optionally, the information for indicating the reference signal resource corresponding to the model monitoring is included in the configuration/indication/trigger information of the first reference signal resource. For example, the configuration/indication/trigger information of the first reference signal resource includes an identifier/information field for indicating that the first reference signal resource is used for model monitoring. At this point, it can be considered that the first signaling includes the configuration/indication/trigger information of the first reference signal resource.

The information in the first signaling used to instruct the UE to perform model monitoring and the information for indicating the first reference signal resource may be carried in the same message/information field/signaling, or may be carried in different messages/information fields/signaling.

For example, a signaling used to indicate that the first reference signal resource is used for the model monitoring is a configuration signaling/trigger signaling/indication signaling of the first reference signal resource, and a signaling used to instruct the UE to perform model monitoring is another signaling. That is, the first signaling includes at least two signalings: the configuration signaling/trigger signaling/indication signaling of the first reference signal resource, and the signaling used to instruct the UE to perform model monitoring.

For another example, the first signaling is a configuration signaling/trigger signaling/indication signaling of the first reference signal resource, and the signaling simultaneously indicates that the first reference signal resource is used for the model monitoring, and instructs the UE to perform model monitoring. That is, when the UE receives the signaling, the UE needs to use the first reference signal resource for model monitoring in response to the signaling.

(4) information for indicating transmission location/channel information of a second CSI corresponding to model monitoring, etc.

Similar to (3), the information used to instruct the UE to perform model monitoring and the information used to indicate the transmission position/channel of the second CSI can be carried through the same message/information field/signaling, or can be carried through different messages/information fields/signaling.

The step S13 may specifically include that: based on the transmission position of the second CSI, the UE determines an AI/ML model corresponding to the transmission position, and perform model monitoring on the AI/ML model; the UE monitors performance of the AI/ML model and transmits a corresponding performance report to the base station.

Alternatively, the step 13 may specifically include that: based on the channel of the second CSI, the UE determines the AI/ML model corresponding to the channel, and perform model monitoring on the AI/ML model; the UE monitors the performance of the AI/ML model and transmits a corresponding performance report to the base station

(5) indicating time information corresponding to model monitoring/model performance reporting.

Similar to (3), information used to instruct the UE to perform model monitoring and information used to indicate time corresponding to the model monitoring/model performance report can be carried through the same message/information field/signaling, or can be carried through different messages/information fields/signaling.

The time information may include one or more of starting time, end time and duration for model monitoring, time domain resources corresponding to the model monitoring, time-frequency resources corresponding to the model monitoring, period, and effective time of signaling for instructing the UE to perform the model monitoring; and/or,
one or more of transmission occasion of the performance report, the time domain resources corresponding to the performance report, the time-frequency resources corresponding to the performance report, the period corresponding to the performance report, and the channel corresponding to the performance report.

The UE may determine, based on the time information, the time to perform the model monitoring, and/or the time to feedback the model performance report.

For example, the UE determines the starting time of the model monitoring based on the time information, and the UE performs model monitoring from the starting time/after the starting time. For another example, the UE determines end time of the model monitoring based on the time information, performs model monitoring before the end time, and no longer performs model monitoring after the end time. For another example, the UE determines a period of the model monitoring based on the time information, and performs model monitoring according to the period.

Optionally, the time information is information for indicating a reference time point.

The UE performs model monitoring based on a signal at the reference time point/performs model monitoring based on a signal before the reference time point/performs model monitoring based on a signal after the reference time point; and/or,

the UE transmits a model performance report at the reference time point/transmits a model performance report before the reference time point/transmits a model performance report after the reference time point.

Optionally, the information for indicating the reference time point indicates two reference time points, one for indicating starting time for performing model monitoring/transmitting a model performance report, and the other for indicating end time for performing model monitoring/transmitting a model performance report.

Optionally, the time information is information for indicating reference resource information corresponding to model monitoring (the reference resource information is used to indicate reference resources).

The reference resource may be used to indicate a time point, for example, the UE performs model monitoring based on a reference signal resource on/starting from/after the reference resource.

The time information may include: starting time, duration, period, etc. For example, the time information may be time period information, for example, indicating a time period in which the UE performs model monitoring.

(6) information for indicating CSI report corresponding to model monitoring, and/or information for instructing the UE to transmit a CSI report corresponding to the model monitoring.

Similar to (3), the information used to instruct the UE to perform model monitoring and the information used to indicate the CSI report corresponding to the model monitoring, and/or the information used to instruct the UE to transmit the CSI report corresponding to the model monitoring, can be carried through the same message/information field/signaling, or can be carried through different messages/information fields/signaling.

Based on this information, the UE may determine which reference signal/reference signal resource/model corresponds to which CSI report to perform model monitoring.

The base station may configure a dedicated CSI configuration/CSI report configuration used for model monitoring. That is, there is a type of CSI report, which is a dedicated CSI report for model monitoring.

Optionally, the information is included in the configuration information/indication information/trigger information for the CSI report. For example, the configuration information/indication information/trigger information for the CSI report includes information for indicating that the CSI report corresponds to model monitoring (i.e., indicating that the UE can use relevant information of the CSI report for model monitoring).

Specifically, the configuration/indication/trigger information for the CSI report includes an identifier/information field for indicating that relevant information of the CSI report (corresponding reference signal/corresponding reference signal resource/corresponding AI/ML model) is used for model monitoring. At this point, it can be considered that the first signaling includes configuration/indication/trigger information for the CSI report.

(7) information for indicating content of a performance report and/or a format of the performance report.

Similar to (3), the information used to instruct the UE to perform model monitoring and the information used to indicate the content included in the performance report, and/or the format of the performance report, can be carried through the same message/information field/signaling, or can be carried through different messages/information fields/signaling.

The format of the model performance report includes one or more of: an encoding mode of the model performance report, and information filed included in the model performance.

The UE may determine the content included in the performance report according to the information, and may include the content when transmitting the performance report.

The UE may determine the format of the performance report according to the information, and transmit the content of the performance report based on the format.

As described above, optionally, the same signaling is used to indicate one or more of the above information.

Optionally, at least two items of the above information are indicated through different signalings (for example, one is indicated by MAC CE and the other is indicated by RRC; for another example, one is indicated by one MAC CE and the other is indicated by another MAC CE; for another example, one is indicated by one RRC parameter and the other is indicated by another RRC parameter).

The signaling may be one or more of RRC signaling/MAC-CE signaling/DCI signaling.

The present disclosure can be applicable to the scenario where N>=1 models, that is, one message can instruct the UE to perform performance monitoring of one model (N=1), or one message can instruct the UE to perform performance monitoring of multiple models (N>1). The first AI/ML model can be one AI model or multiple AI models.

The first signaling in the present disclosure may be for a certain AI model, for example, instructing the UE to perform performance monitoring of a first AI model; it may also be for a certain function, for example, instructing the UE to perform model monitoring of CSI feedback based on AI; it may also be for a certain scenario, for example, instructing the UE to perform model monitoring of CSI feedback based on AI in a certain scenario (Taking CSI feedback as an example, it can also be extended to positioning, beam management, etc.).

Some options that can be used individually or together are described hereinafter.

In an optional manner, the UE performs model monitoring based on the first signaling in a way including: performing model monitoring starting from/after a moment of the first signaling plus K first-time units (such as slots, symbols, etc.), where K is an integer greater than or equal to 0.

Optionally, K may be indicated by the base station (one way is that K is indicated by the above information for indicating the time information corresponding to the indication model monitoring/model performance report included in the first signaling), or agreed upon by the protocol, or determined by the UE; K may also be determined based on the UE capability.

In another optional manner, the UE performs model monitoring based on the first signaling in a way including: performing model monitoring from/after a moment where the first signaling is located.

The moment where the first signaling is located, may include:
a second-time unit in which the first signaling is transmitted; for example, the slot in which the first signaling is transmitted;
a last second-time unit in which the first signaling is transmitted; for example, the last lot/symbol in which the first signaling is transmitted;
a first second-time unit in which the first signaling is transmitted; for example, a first slot/symbol in which the first signaling is transmitted;

Units of the first-time unit and the second-time unit are the same or different.

Examples of units of the first-time unit may be a slot, a symbol, a subframe, a frame, etc.

Examples of units of the second-time unit may be a slot, a symbol, a subframe, a frame, etc.

In an optional manner, the UE determines time corresponding to model monitoring based on the first signaling, and performs model monitoring based on the time.

In an optional manner, the UE determines the AI/ML model corresponding to the model monitoring based on the first signaling, and uses the AI/ML model to perform model monitoring.

In an optional manner, the UE determines a reference signal/reference signal resource corresponding to the model monitoring based on the first signaling, and performs model monitoring based on the reference signal/reference signal resource.

In an optional manner, the UE receives a second CSI sent by the base station based on the first signaling, and performs model monitoring based on the second CSI.

The second CSI corresponds to the first CSI sent by the UE to the base station, and the UE performs model monitoring based on the second CSI. Optionally, the first CSI is determined by the UE based on the first AI/ML model, and the second CSI is determined by the base station based on the first CSI (for example, the second CSI is determined by the base station based on the first CSI and a second AI/ML model corresponding to the first AI/ML model used by the UE to determine the first CSI). In this case, the UE performs model monitoring on the first AI/ML model and/or the second AI/ML model, and feedbacks a performance report based on the model monitoring.

In an optional manner, the UE receives a second reference signal based on the first signaling, and performs model monitoring based on the second reference signal.

The UE determines the first CSI based on the first AI/ML model and transmits the first CSI to the base station. The beamforming of the second reference signal is determined by the base station based on the first CSI (for example, the beamforming of the second downlink reference signal is determined by the base station based on the first CSI and a second AI/ML model corresponding to the first AI/ML model used by the UE for determining the first CSI). In this case, the UE performs model monitoring on the first AI/ML model and/or the second AI/ML model, and feedbacks a performance report based on the model monitoring.

In an optional manner, the UE determines a first reference signal corresponding to the first signaling; determines a first CSI based on the first reference signal; and optionally, evaluates the performance of the first AI/ML model based on the first CSI. The first CSI is obtained based on the first AI/ML model or a third AI/ML model corresponding to the first AI/ML model.

Alternatively, optionally, the UE evaluates the performance of the first AI/ML model based on the first CSI and the second CSI; the second CSI is obtained in a different manner from the first CSI.

Optionally, the first CSI and the second CSI are both CSI obtained based on the first reference signal.

Optionally, the second CSI is CSI obtained in a non-AI/ML manner.

Optionally, the second CSI is obtained based on a second AI/ML model.

Some examples of performance indicators to evaluate model performance/performance of first approach:
precision indicator, such as squared generalized cosine similarity (SGCS), generalized cosine similarity (GCS), normalized mean square error (MMSE), mean square error (MSE), etc.;
system performance indicator, such as block error rate (BLER), throughput, hypothetical BLER, hypothetical throughput, Acknowledgement (ACK), non-acknowledgement (NACK), etc.;
indicator corresponding to distribution such as mean, mean square error, etc.;
other performance indicator, such as reference signal received power (RSRP), reference signal received quality (RSRQ), signal-to-interference-noise ratio (SINR), etc.

### Embodiment 2

The first communication device is a UE, and the second communication device is a base station.

At S21, the base station transmits a first signaling, where the first signaling instructs the UE to monitor the CSI feedback approach.

Optionally, the CSI feedback approach is a certain type of approach, for example, including one of the following:
AI/ML-based CSI feedback approach;
Codebook-based CSI feedback approach.

Optionally, the AI/ML-based CSI feedback approach includes one of the following:
AI/ML-based CSI compression feedback approach;
CSI prediction approach based on AI/ML.

Optionally, the CSI feedback approach is a specific CSI feedback approach, for example, including one of the following:
CSI feedback approach based on the first AI/ML model;
CSI feedback approach based on the first codebook.

Optionally, the CSI feedback approach based on the first codebook includes but is not limited to one of the following:
CSI feedback approach based on Type I codebook;
CSI feedback approach based on Type II codebook.

At S22, the UE receives the first signaling.

At S23, the UE transmits a performance report based on the first signaling.

Specifically, the step S23 includes that the UE monitors the CSI feedback approach based on the first signaling; and transmits a performance report corresponding to the monitoring of the CSI feedback approach.

Further, the UE monitors the CSI feedback approach based on the first signaling in a way including that the UE evaluates the performance of the CSI feedback approach based on the first signaling; accordingly, the transmitting a performance report corresponding to the monitoring of the CSI feedback approach includes: transmitting a performance report determined based on the performance.

At S24, the base station receives the performance report.

Optionally, the first signaling does not indicate monitoring of a specific CSI feedback approach, and the UE determines which CSI feedback approach to monitor and transmit a performance report of which CSI feedback approach.

Optionally, the first signaling includes at least one of the following information:
(1) instructing the UE to monitor the first CSI feedback approach.

Correspondingly, the step S23 may specifically include that the UE monitors the first CSI feedback approach based on the first signaling, and transmits a performance report based on the monitoring.

Optionally, the signaling for activating/enabling the first CSI feedback approach may be used to instruct the UE to monitor the first CSI feedback approach. That is, in response to activating/enabling the first CSI feedback approach, the UE monitors a first CSI feedback approach (the base station activating/enabling the first CSI feedback approach for the UE, means instructing the UE to monitor the first CSI feedback approach and feedback the performance report).

In the solution (1), the performance report may be a performance report corresponding to the first CSI feedback approach. That is, the first signaling indicates the UE to monitor which CSI feedback approach and the UE to feed back a performance report corresponding to which CSI feedback approach.

Specifically, the first signaling may include information for indicating the first CSI feedback approach, for example:
an identifier of a first CSI feedback approach, for example, an ID;
RS indication information corresponding to the first CSI feedback approach (for example, information for indicating ID of RS corresponding to the first CSI feedback approach);
RS resource indication information corresponding to the first CSI feedback approach (for example, information for indicating RS resource ID corresponding to the first CSI feedback approach);
RS resource set indication information corresponding to the first CSI feedback approach (for example, information for indicating RS resource set ID corresponding to the first CSI feedback approach);
CSI report indication information corresponding to the first CSI feedback approach (for example, information for indicating a CSI report ID corresponding to the first CSI feedback approach);
CSI configuration indication information corresponding to the first CSI feedback approach (for example, information for indicating CSI config ID corresponding to the first CSI feedback approach), etc.

The first CSI feedback approach may be one or more CSI feedback approaches.

(2) ID information, which may be CSI feedback approach ID, function ID, scenario ID, etc.

Optionally, the CSI feedback approach ID is a CSI feedback approach ID corresponding to the performance report.

Correspondingly, the step S23 specifically includes that the UE monitors a CSI feedback approach corresponding to the CSI feedback approach ID, and feeds back a performance report corresponding to the CSI feedback approach.

Optionally, the CSI feedback approach ID is a candidate CSI feedback approach ID.

Correspondingly, the step S23 specifically includes that the UE monitors one or more of one or more candidate CSI feedback approaches corresponding to these IDs, and reports performance reports corresponding to one or more CSI feedback approaches among the CSI feedback approaches monitored by the UE.

Optionally, the scenario ID is an ID of a scenario corresponding to the performance report.

Correspondingly, the step S23 specifically includes that the UE monitors the CSI feedback approach corresponding to the scenario ID, and feeds back a performance report corresponding to the CSI feedback approach corresponding to the scenario ID.

Optional, the function ID is a candidate scenario ID.

Correspondingly, the step S23 specifically includes that the UE monitors one or more of one or more candidate scenarios corresponding to these IDs, and reports performance reports corresponding to one or more scenarios in the scenarios monitored by the UE.

Optionally, the UE determines the content included in the performance report based on the ID information. That is, there are at least two IDs, and the content included in the performance reports corresponding to at least two IDs is different. For example, the content included in the performance report corresponding to the codebook-based CSI feedback approach is different from the content included in the performance report corresponding to another AI/ML-based CSI feedback approach.

Optionally, the UE determines a reporting mode of the performance report based on the ID information, that is, there are at least two IDs, and the reporting modes of the performance reports corresponding to at least two IDs are different.

Optionally, the UE determines the format of the performance report based on the ID information, that is, there are at least two IDs, and the formats of the performance reports corresponding to at least two IDs are different.

Of course, the present disclosure is also applicable to scenarios where the content/format/reporting mode of performance reports corresponding to different IDs are the same. In this case, the UE does not need to determine the content/format/reporting mode of the performance report based on the ID.

(3) Information for indicating reference signal resources corresponding to the monitoring for a CSI feedback approach.

Optionally, the first signaling indicates a first reference signal resource for monitoring of CSI feedback approach. The UE performs monitoring of CSI feedback approach based on a reference signal corresponding to the first reference signal resource. The first reference signal resource may be a CSI-RS resource, a tracking reference signal (TRS) resource, etc.

The base station may also configure a dedicated reference signal resource used for monitoring the CSI feedback approach. That is, there is a type of reference signal resource, which is a dedicated reference signal resource used for monitoring the CSI feedback approach. That is, the first reference signal resource is a dedicated reference signal resource.

Optionally, the information for indicating the reference signal resource corresponding to the monitoring for the CSI feedback approach is included in the configuration/indication/trigger information of the first reference signal resource. For example, the configuration/indication/trigger information of the first reference signal resource includes an identifier/information field for indicating that the first reference signal resource is used for monitoring of CSI feedback approach. At this point, it can be considered that the first signaling includes the configuration/indication/trigger information of the first reference signal resource. The information in the first signaling used to instruct the UE to monitor the CSI feedback approach and the information used to indicate the first reference signal resource, can be carried by the same message/information field/signaling, or caried by different messages/information fields/signaling.

For example, the signaling used to indicate that the first reference signal resource is used for monitoring of the CSI feedback approach is the configuration signaling/trigger signaling/indication signaling of the first reference signal resource, and the signaling used to instruct the UE to perform monitoring of the CSI feedback approach is another signaling. That is, the first signaling includes at least two signalings: the configuration signaling/trigger signaling/indication signaling of the first reference signal resource, and the signaling used to instruct the UE to perform monitoring of the CSI feedback approach.

For another example, the first signaling is a configuration signaling/trigger signaling/indication signaling of the first reference signal resource, and the signaling simultaneously indicates that the first reference signal resource is used for monitoring of the CSI feedback approach, and instructs the UE to perform monitoring of the CSI feedback approach. That is, when the UE receives the signaling, the UE needs to use the first reference signal resource to perform monitoring of the CSI feedback approach in response to the signaling.

(4) information for indicating transmission location/channel of a second CSI corresponding to the CSI feedback approach, etc.

Similar to (3), the information used to instruct the UE to monitor the CSI feedback approach and the information used to indicate the transmission position/channel of the second CSI, can be carried through the same message/information field/signaling, or can be carried through different messages/information fields/signaling.

The step S23 may specifically include that the UE may determine a CSI feedback approach corresponding to the position based on the transmission position of the second CSI, and perform monitoring of CSI feedback approach. The UE monitors the performance of the CSI feedback approach and transmits a corresponding performance report to the base station.

Alternatively, the step S23 may specifically include that based on the channel of the second CSI, the UE may determine a CSI feedback approach corresponding to the channel, and perform monitoring of the CSI feedback approach. The UE monitors the performance of the CSI feedback approach and transmits a corresponding performance report to the base station.

(5) Indicating time information corresponding to the monitoring/performance report for the CSI feedback approach.

Similar to (3), the information used to instruct the UE to monitor the CSI feedback approach and the information used to indicate the time corresponding to the monitoring/performance report for the CSI feedback approach can be carried through the same message/information field/signaling, or can be carried through different messages/information fields/signaling.

The time information may include one or more of starting time, end time and duration used for monitoring of an indicated CSI feedback approach, time domain resources corresponding to the monitoring for the CSI feedback approach, time-frequency resources corresponding to the monitoring for the CSI feedback approach, period, and effective time of signaling for instructing the UE to perform monitoring of the CSI feedback approach; and/or,
one or more of transmission occasion used for an indicated performance report, time domain resource corresponding to the performance report, time-frequency resources corresponding to the performance report, period corresponding to the performance report, and channel corresponding to the performance report.

The UE may determine, based on the time information, the time for monitoring the CSI feedback approach and/or the time for feeding back the performance report.

For example, the UE determines the starting time for monitoring the CSI feedback approach based on the time information, and the UE performs monitoring of the CSI feedback approach from the starting time/after the starting time. For another example, the UE determines the end time for monitoring of the CSI feedback approach based on the time information, performs model monitoring before the end time, and no longer performs monitoring of the CSI feedback approach after the end time. For another example, the UE determines the period for monitoring of the CSI feedback approach based on the time information, and performs monitoring of the CSI feedback approach according to the period.

Optionally, the information is information for indicating a reference time point.

The UE monitors the CSI feedback approach based on a signal at the reference time point/monitors the CSI feedback approach based on a signal before the reference time point/monitors the CSI feedback approach based on a signal after the reference time point; and/or,
the UE transmits a performance report at a reference time point/transmits a performance report before the reference time point/transmits a performance report after the reference time point.

Optionally, the information for indicating the reference time point indicates two reference time points, one for indicating the starting time of performing monitoring of CSI feedback approach/transmitting performance reports, and one for indicating the end time of performing monitoring of CSI feedback approach /transmitting performance reports.

Optionally, the time information is information for indicating reference resource information corresponding to the monitoring for the CSI feedback approach (reference resource information is used to indicate reference resources).

The reference resource can be used to indicate a time point, for example, the UE monitors the CSI feedback approach based on a reference signal resource on/starting from/after the reference resource.

The time information may include: a starting time, a duration, a period, etc. For example, the time information may be time period information, for example, indicating in which time period the UE performs monitoring of CSI feedback approach.

(6) Indicating information of CSI report corresponding to the monitoring for the CSI feedback approach, and/or instructing the UE to transmit information of CSI report corresponding to the monitoring for the CSI feedback approach.

Similar to (3), the information used to instruct the UE to monitor the CSI feedback approach and the information used to indicate the CSI report corresponding to the monitoring for the CSI feedback approach, and/or the information for instructing the UE to transmit the CSI report corresponding to the monitoring for the CSI feedback approach, can be carried through the same message/information field/signaling, or can be carried through different messages/information fields/signaling.

Based on this information, the UE may determine which reference signal/reference signal resource/model corresponding to which CSI report to perform monitoring of the CSI feedback approach.

The base station may configure a dedicated CSI configuration/CSI report configuration used for monitoring the CSI feedback approach. That is, there is a type of CSI report, which is a dedicated CSI report used for monitoring the CSI feedback approach.

Optionally, the information is included in the configuration information/indication information/trigger information for the CSI report. For example, the configuration information/indication information/trigger information for the CSI report includes information for indicating that the CSI report corresponds to the monitoring for the CSI feedback approach (i.e., indicating that the UE can use relevant information of the CSI report to perform CSI feedback approach monitoring).

Specifically, the configuration/indication/trigger information for the CSI report includes an identifier/information field for indicating that the relevant information of the CSI report (corresponding reference signal/corresponding reference signal resource/corresponding CSI feedback approach) is used for CSI feedback approach monitoring. At this point, it can be considered that the first signaling includes the configuration/indication/trigger information for the CSI report.

(7) information for indicating content of the performance report and/or format of the performance report.

Similar to (3), the information used to instruct the UE to monitor the CSI feedback approach and the information used to indicate the content included in the performance report, and/or the format of the performance report, can be carried through the same message/information field/signaling, or can be carried through different messages/information fields/signaling.

The format of the performance report includes one or more of an encoding mode of the performance report, and information fields included in the performance report.

The UE may determine the content included in the performance report based on the information. Then, when the UE transmits the performance report, the content can be included.

The UE may determine the format of the performance report according to the information, and transmit the content of the performance report based on the format.

As described above, optionally, the same signaling is used to indicate one or more of the above information.

Optionally, at least two items of the above information are indicated through different signalings (for example, one is indicated by MAC CE and the other is indicated by RRC; for another example, one is indicated by one MAC CE and the other is indicated by another MAC CE; for another example, one is indicated by one RRC parameter and the other is indicated by another RRC parameter).

The signaling may be one or more of RRC signaling/MAC-CE signaling/DCI signaling.

The present disclosure can be applicable to scenarios where N>=1 models, that is, one message can instruct the UE to perform performance monitoring of one model (N=1), or one message can instruct the UE to perform performance monitoring of multiple models (N>1). The first CSI feedback approach can be one AI model or multiple AI models.

The first signaling in the present disclosure may be for a certain AI model, for example, instructing the UE to monitor the performance of a first AI model; it may also be for a certain function, for example, instructing the UE to perform CSI feedback approach monitoring on an AI-based CSI feedback; it may also be for a certain scenario, for example, instructing the UE to perform CSI feedback approach monitoring on an AI-based CSI feedback in a certain scenario (taking CSI feedback as an example, it can also be extended to positioning, beam management, etc.).

Some options that can be used individually or together are described hereinafter.

Optionally, the UE performs the CSI feedback approach monitoring based on the first signaling in a way including: performing CSI feedback approach monitoring starting from/after a moment of the first signaling plus K first-time units (such as slots, symbols, etc.), where K is an integer greater than or equal to 0.

Optionally, K may be indicated by the base station (one way is that K is indicated by the above information for indicating the time information corresponding to the CSI feedback approach monitoring/performance report included in the first signaling), or agreed upon by the protocol, or determined by the UE; K may also be determined based on the UE capability.

The moment where the first signaling is located, may include:
a second-time unit in which the first signaling is transmitted; for example, a slot in which the first signaling is transmitted;
a last second-time unit in which the first signaling is transmitted; for example, the last lot/symbol in which the first signaling is transmitted;
a first second-time unit in which the first signaling is transmitted; for example, a first slot/symbol in which the first signaling is transmitted;
Units of the first-time unit and the second-time unit are the same or different.

Examples of units of the first-time unit may be a slot, a symbol, a subframe, a frame, etc.

Examples of units of the second-time unit may be a slot, a symbol, a subframe, a frame, etc.

In an optional manner, the UE determines time corresponding to CSI feedback approach monitoring based on the first signaling, and performs CSI feedback approach monitoring based on the time.

In an optional manner, the UE determines a CSI feedback approach corresponding to the CSI feedback approach monitoring based on the first signaling, and uses the CSI feedback approach to perform CSI feedback approach monitoring.

In an optional manner, the UE determines a reference signal/reference signal resource corresponding to the CSI feedback approach monitoring based on the first signaling, and performs CSI feedback approach monitoring based on the reference signal/reference signal resource.

Some examples of performance indicators to evaluate performance of a first CSI feedback approach:
precision indicator, such as squared generalized cosine similarity (SGCS), generalized cosine similarity (GCS), normalized mean square error (MMSE), mean square error (MSE), etc.;
system performance indicator, such as block error rate (BLER), throughput, hypothetical BLER, hypothetical throughput, Acknowledgement (ACK), non-acknowledgement (NACK), etc.;
indicator corresponding to distribution such as mean, mean square error, etc.;
other performance indicator, such as reference signal received power (RSRP), reference signal received quality (RSRQ), signal-to-interference-noise ratio (SINR), etc.

### Example 3 (Applicable to AI/ML-based positioning)

The first communication device is a UE or a third-party entity, and the second communication device is a base station.

At S31, the base station transmits a first signaling, where the first signaling instructs the UE or the third-party entity to perform model monitoring.

Here, the third-party entity can be a positioning reference unit (PRU) or LMF or a device dedicated to AI model monitoring.

Optionally, the method is applicable to UE-based positioning. In this case, an AI/ML model is deployed on the UE side or the PRU side or a device dedicated to AI model monitoring, and the UE or PRU performs model monitoring based on the first signaling and one or more deployed AI/ML models.

Optionally, the method is applicable to UE-assisted/LMF-based positioning. In this case, an AI/ML model is deployed on the LMF side, and the LMF performs model monitoring based on the first signaling and one or more deployed AI/ML models.

At S32, the UE or the third-party entity receives the first signaling.

At S33, the UE or the third-party entity transmits a performance report based on the first signaling.

Specifically, the step S33 includes that the UE/third-party entity performs model monitoring based on the first signaling, and transmits a performance report corresponding to the model monitoring.

Further, the UE/third-party entity perform the model monitoring based on the first signaling in a way including that the UE/third-party entity evaluates performance of the model based on the first signaling. Correspondingly, the transmitting a performance report corresponding to the model monitoring includes: transmitting a performance report determined based on the performance.

At S34, the base station receives the performance report.

Optionally, the first signaling does not indicate a specific AI/ML model, and the UE/third-party entity determines which AI/ML model to monitor and which AI/ML model's performance report to transmit.

Optionally, the first signaling includes at least one of the following information:

### (1) instructing the UE/third-party entity to monitor a first AI/ML model.

Correspondingly, the step S33 may specifically include that the UE/third-party entity performs monitoring of the first AI/ML model based on the first signaling, and transmits a performance report based on the monitoring.

Optionally, the signaling for activating/enabling the first AI/ML model may be used to instruct the UE/third-party entity to monitor the first AI/ML model. That is, in response to activating/enabling the first AI/ML model, the UE/third-party entity monitors the first AI/ML model (the base station activating/enabling the first AI/ML model for the UE/third-party entity, means instructing the UE/third-party entity to monitor the first AI/ML model and feedback a performance report).

In the solution (1), the performance report may be a performance report corresponding to the first AI/ML model. That is, the first signaling indicates which AI/ML model the UE/third-party entity monitors, and the UE/third-party entity feeds back the performance report corresponding to which AI/ML model.

Specifically, the first signaling may include information for indicating the first AI/ML model, for example:
index (ID) of the first AI/ML model;
RS indication information corresponding to the first AI/ML model (for example, information indicating ID of RS corresponding to the first AI/ML model); for positioning, the reference signal may be a downlink positioning reference signal DL-PRS;
RS resource indication information corresponding to the first AI/ML model (for example, information for indicating RS resource ID corresponding to the first AI/ML model); for positioning, the reference signal may be a downlink positioning reference signal DL-PRS;
RS resource set indication information corresponding to the first AI/ML model (for example, information for indicating RS resource set ID corresponding to the first AI/ML model); for positioning, the reference signal may be a downlink positioning reference signal DL-PRS.

The first AI/ML model may be one or more AI/ML models.

(2) ID information, which may be a model ID, a function ID, a scenario ID, etc.

Optionally, the model ID is a model ID corresponding to the performance report.

Correspondingly, the step S33 specifically includes that the UE/third-party entity monitors the AI/ML model corresponding to the model ID, and feeds back a performance report corresponding to the AI/ML model.

Optionally, the model ID is a candidate model ID.

Correspondingly, the step S33 specifically includes that the UE/third-party entity monitors one or more of one or more candidate AI/ML models corresponding to these IDs, and reports performance reports corresponding to one or more AI/ML models among the AI/ML models monitored by the UE/third-party entity.

Optionally, the function ID is a function ID corresponding to the performance report.

Correspondingly, the step S33 specifically includes that the UE/third-party entity monitors the AI/ML model corresponding to the function ID, and feeds back a performance report corresponding to the AI/ML model corresponding to the function ID.

Optionally, the function ID is a candidate function ID.

Correspondingly, the step S33 specifically includes that the UE/third-party entity monitors one or more of one or more candidate functions corresponding to these IDs, and reports performance reports corresponding to one or more of the functions monitored by the UE/third-party entity.

The function ID can also be called type ID, scenario ID, etc. It can be used to indicate the type and/or application scenario of function, etc. Some examples of functions are: CSI compression feedback; CSI prediction; positioning; beam management; resource scheduling; indoor/outdoor; factory; city, etc.

Optionally, the UE/third-party entity determines content included in the performance report based on the function ID. That is, there are at least two function IDs, and the content included in the performance reports corresponding to at least two function IDs is different. For example, the content included in the performance report corresponding to CSI compression feedback is different from that included in the performance report corresponding to positioning.

Optionally, the UE/third-party entity determines the reporting mode of the performance report based on the function ID. That is, there are at least two function IDs, and the reporting modes of the performance reports corresponding to at least two function IDs are different. For example, the reporting mode of the performance report corresponding to CSI compression feedback is different from that of the performance report corresponding to positioning.

Optionally, the UE/third-party entity determines the format of the performance report based on the function ID. That is, there are at least two function IDs, and the formats of the performance reports corresponding to at least two function IDs are different. For example, the format of the performance report corresponding to CSI compression feedback is different from that of the performance report corresponding to positioning.

Of course, the present disclosure is also applicable to scenarios where the content/format/reporting mode of performance reports corresponding to different function IDs are the same. In this case, the UE does not need to determine the content/format/reporting mode of the performance report based on the function ID.

(3) Information for indicating reference signal resources corresponding to model monitoring.

Optionally, the first signaling indicates a first reference signal resource for model monitoring. The UE/third-party entity performs model monitoring based on a reference signal corresponding to the first reference signal resource. The first reference signal resource may be a DL-PRS resource, etc. Of course, the first reference signal resource may also be other reference signal resources that can be used for positioning.

The base station may also configure a dedicated reference signal resource used for model monitoring. That is, there is a type of reference signal resource, which is a dedicated reference signal resource used for model monitoring. That is, the first reference signal resource is a dedicated specific reference signal resource.

Optionally, the information for indicating the reference signal resource corresponding to the model monitoring is included in the configuration/indication/trigger information of the first reference signal resource. For example, the configuration/indication/trigger information of the first reference signal resource includes an identifier/information field for indicating that the first reference signal resource is used for model monitoring. At this point, it can be considered that the first signaling includes the configuration/indication/trigger information of the first reference signal resource.

The information in the first signaling used to instruct the UE/third-party entity to perform model monitoring and the information used to indicate the first reference signal resource, may be carried in the same message/information field/signaling, or may be carried in different messages/information fields/signaling.

For example, the signaling used to indicate that the first reference signal resource is used for the model monitoring is the configuration signaling/trigger signaling/indication signaling of the first reference signal resource, and the signaling used to instruct the UE/third-party entity to perform model monitoring is another signaling. That is, the first signaling includes at least two signalings: the configuration signaling/trigger signaling/indication signaling of the first reference signal resource, and the signaling used to instruct the UE/third-party entity to perform model monitoring.

For another example, the first signaling is a configuration signaling/trigger signaling/indication signaling of the first reference signal resource, and the signaling simultaneously indicates that the first reference signal resource is used for the model monitoring, and instructs the UE/third-party entity to perform model monitoring. That is, when the UE/third-party entity receives the signaling, the UE needs to use the first reference signal resource for model monitoring in response to the signaling.

**(4)** Information for indicating transmission location/channel of position-related information/time measurement-related information/angle measurement-related information corresponding to the model monitoring.

Similar to (3), the information used to instruct the UE/third-party entity to perform model monitoring and the information used to indicate the transmission location/channel of location-related information/time measurement-related information/angle measurement-related information, may be carried through the same message/information field/signaling, or may be carried through different messages/information fields/signaling.

The step S33 may specifically include that: the UE/third-party entity may determine the AI/ML model corresponding to the position based on the transmission position of the position-related information/time measurement-related information/angle measurement, and perform model monitoring on the AI/ML model. The UE/third-party entity monitors the performance of the AI/ML model and transmits a corresponding performance report to the base station.

Alternatively, the step S33 may specifically include that the UE/third-party entity may determine the AI/ML model corresponding to the channel based on the channel of the location-related information/time measurement-related information/angle measurement, and perform model monitoring on the AI/ML model; the UE/third-party entity monitors the performance of the AI/ML model and transmits a corresponding performance report to the base station.

(5) Indicating time information corresponding to model monitoring/model performance reporting.

Similar to (3), the information used to instruct the UE/third-party entity to perform model monitoring and the information used to indicate the time corresponding to the model monitoring/model performance report, can be carried through the same message/information field/signaling, or through different messages/information fields/signaling.

The time information may include one or more of starting time, end time and duration used for indicated model monitoring, time domain resources corresponding to the model monitoring, time-frequency resources corresponding to the model monitoring, period, and effective time of signaling for instructing the UE/third-party entity to perform the model monitoring; and/or,
one or more of transmission occasion of an indicated performance report, time domain resources corresponding to the performance report, time-frequency resources corresponding to the performance report, period corresponding to the performance report, and channel corresponding to the performance report.

The UE/third-party entity may determine, based on the time information, the time to perform the model monitoring and/or the time to feedback the model performance report.

For example, the UE/third-party entity determines the starting time of model monitoring based on the time information, and the UE/third-party entity performs model monitoring from the starting time/after the starting time. For another example, the UE/third-party entity determines the end time of model monitoring based on the time information, performs model monitoring before the end time, and no longer performs model monitoring after the end time. For another example, the UE/third-party entity determines the period of model monitoring based on the time information, and performs model monitoring according to the period.

Optionally, the time information is information indicating a reference time point.

The UE/third party entity performs model monitoring based on a signal at the reference time point/performs model monitoring based on a signal before the reference time point/performs model monitoring based on a signal after the reference time point; and/or,
the UE/third-party entity transmits the model performance report at the reference time point/transmits the model performance report before the reference time point/transmits the model performance report after the reference time point.

Optionally, the information for indicating the reference time point indicates two reference time points, one for indicating the starting time of model monitoring/transmitting model performance report, and the other for indicating the end time of model monitoring/transmitting model performance report.

Optionally, the time information is information for indicating reference resource information corresponding to model monitoring (reference resource information is used to indicate reference resources).

The reference resource may be used to indicate a time point, for example, the UE/third party entity performs model monitoring based on a reference signal resource before/starting from/after the reference resource.

The time information may include: a starting time, a duration, a period, etc. For example, the time information may be time period information, for example, indicating a time period in which the UE/third-party entity performs model monitoring.

(6) information for indicating content of the performance report and/or format of the performance report.

Similar to (3), the information used to instruct the UE/third-party entity to perform model monitoring and the information used to indicate the content included in the performance report, and/or the format of the performance report, can be carried through the same message/information field/signaling, or through different messages/information fields/signaling.

The format of the model performance report includes one or more of an encoding mode of the model performance report, and information fields included in the model performance.

The UE/third-party entity may determine the content included in the performance report based on the information, and the UE/third-party entity may include the content when transmitting the performance report.

The UE/third-party entity may determine the format of the performance report according to the information, and transmit the content of the performance report based on the format.

As described above, optionally, the same signaling is used to indicate one or more of the above information.

Optionally, at least two items of the above information are carried through different signaling indications (for example, one is indicated by MAC CE and the other is indicated by RRC; for another example, one is indicated by one MAC CE and the other is indicated by another MAC CE; for another example, one is indicated by one RRC parameter and the other is indicated by another RRC parameter).

The signaling may be one or more of RRC signaling/MAC-CE signaling/DCI signaling.

The present disclosure can be applicable to the scenario where N>=1 models, that is, one message can instruct the UE to perform performance monitoring of one model (N=1), or one message can instruct the UE to perform performance monitoring of multiple models (N>1). The first AI/ML model can be one AI model or multiple AI models.

The first signaling in the present disclosure may be for a certain AI model, for example, instructing the UE/third-party entity to perform performance monitoring of the first AI model; it may also be for a certain function, for example, instructing the UE/third-party entity to perform model monitoring of AI-based positioning; it may also be for a certain scenario, for example, instructing the UE/third-party entity to perform model monitoring of AI-based direct positioning in a certain scenario.

Some options that can be used individually or together are described hereinafter.

In an optional manner, the UE/third-party entity performs model monitoring based on the first signaling in a way including: performing model monitoring starting from/after a moment of the first signaling plus K first-time units (such as slots, symbols, etc.), where K is an integer greater than or equal to 0.

Optionally, K may be indicated by the base station (one way is that K is indicated by the above information for indicating the time information corresponding to the model monitoring/model performance report included in the first signaling), or agreed upon by the protocol, or determined by the UE; K may also be determined based on the UE capability; or, K is a first reference signal resource (PRS resource) used for model monitoring after the first signaling.

The moment where the first signaling is located, may include:
a second-time unit in which the first signaling is transmitted; for example, the slot in which the first signaling is transmitted;
a last second-time unit in which the first signaling is transmitted; for example, the last lot/symbol in which the first signaling is transmitted;
a first second-time unit in which the first signaling is transmitted; for example, a first slot/symbol in which the first signaling is transmitted;
Units of the first-time unit and the second-time unit are the same or different.

Examples of units of the first-time unit may be a slot, a symbol, a subframe, a frame, etc.

Examples of units of the second-time unit may be a slot, a symbol, a subframe, a frame, etc.

In an optional manner, the UE/third-party entity determines a time corresponding to model monitoring based on the first signaling, and performs model monitoring based on the time.

In an optional manner, the UE/third-party entity determines the AI/ML model corresponding to the model monitoring based on the first signaling, and uses the AI/ML model to perform model monitoring.

In an optional manner, the UE/third-party entity determines a reference signal/reference signal resource corresponding to the model monitoring based on the first signaling, and performs model monitoring based on the reference signal/reference signal resource.

In an optional manner, the UE/third-party entity determines position-related information/time measurement-related information/angle measurement-related information based on position coordinates obtained based on the global positioning system GPS, the global navigation satellite system GNSS, traditional positioning approaches, base station indications (which can be applicable to PRU), etc., and performs model monitoring based on the position-related information/time measurement-related information/angle measurement.

Optionally, the UE/third-party entity performs AI/ML model monitoring based on the determined location-related information/time measurement-related information/angle measurement-related information and the output of the AI/ML model, and feedbacks a performance report based on the model monitoring.

Some examples of performance indicators to evaluate model performance/performance of first approach:
precision indicator, such as positioning error, time error, angle error, LOS/NLOS recognition accuracy, etc.
indicator corresponding to distribution, such as mean, mean square error, etc.;
other performance indicators; such as RSRP, RSRQ, SINR, etc.

### Example 4 (Applicable to AI/ML-based positioning)

The first communication device is a UE or a base station gNB, and the second communication device is a third-party entity.

At S41, the third-party entity transmits a first signaling, where the first signaling instructs the UE/gNB to perform model monitoring.

Here, the third-party entity can be an LMF or a device dedicated to AI model monitoring, and the positioning reference unit PRU can be considered as a special UE, that is, the PRU can also receive the first signaling and transmit a performance report based on the first signaling.

Optionally, the method is applicable to UE-based positioning or UE-assisted/LMF-based positioning. In this case, an AI/ML model is deployed on the UE side or the PRU side, and the UE or PRU performs model monitoring based on the first signaling transmitted by the third-party entity and one or more deployed AI/ML models.

Optionally, the method is applicable to NG-RAN node assisted positioning. At this time, an AI/ML model is deployed on the gNB side, and the gNB performs model monitoring based on the first signaling transmitted by the third-party entity and one or more deployed AI/ML models. In this embodiment, the gNB can also be considered as a TRP.

At S42, the UE/gNB receives the first signaling.

At S43, UE/gNB transmits a performance report based on the first signaling.

Specifically, the step S43 includes that the UE/gNB performs model monitoring based on the first signaling, and transmits a performance report corresponding to the model monitoring. Further, the UE/gNB performs model monitoring based on the first signaling in a way including that the UE/gNB evaluates the performance of the model based on the first signaling. Accordingly, the transmitting the performance report corresponding to the model monitoring includes: transmitting a performance report determined based on the performance.

At S44, the third-party entity receives the performance report.

Optionally, the first signaling does not indicate a specific AI/ML model, and the UE/third-party entity determines which AI/ML model to monitor and which AI/ML model's performance report to transmit.

Optionally, the first signaling includes at least one of the following information:

### (1) Instructing the UE/gNB to monitor a first AI/ML model.

Correspondingly, the step S43 may specifically include that UE/gNB monitors the first AI/ML model based on the first signaling, and transmits a performance report based on the monitoring.

Optionally, the signaling of activating/enabling the first AI/ML model may be used to instruct the UE/gNB to monitor the first AI/ML model. That is, in response to activating/enabling the first AI/ML model, the UE/gNB monitors the first AI/ML model (the third-party entity activating/enabling the first AI/ML model for the UE/gNB, means instructing the UE/gNB to perform model monitoring on the first AI/ML model and feedback a performance report).

In the solution (1), the performance report may be a performance report corresponding to the first AI/ML model. That is, the first signaling indicates which AI/ML model the UE/gNB monitors, and the UE/gNB feeds back the performance report corresponding to which AI/ML model.

Specifically, the first signaling may include information for indicating the first AI/ML model, for example:
Index (ID) of the first AI/ML model;
RS indication information corresponding to the first AI/ML model (for example, information for indicating ID of RS corresponding to the first AI/ML model); for positioning, the reference signal may be an uplink sounding reference signal UL-SRS;
RS resource indication information corresponding to the first AI/ML model (for example, information for indicating RS resource ID corresponding to the first AI/ML model); for positioning, the reference signal may be an uplink sounding reference signal UL-SRS;
RS resource set indication information corresponding to the first AI/ML model (for example, information for indicating RS resource set ID corresponding to the first AI/ML model); for positioning, the reference signal may be an uplink sounding reference signal UL-SRS;

The first AI/ML model may be one or more AI/ML models.

(2) ID information, which may be a model ID, a function ID, a scenario ID, etc.

Optionally, the model ID is a model ID corresponding to the performance report.

Correspondingly, the step S43 specifically includes that UE/gNB monitors the AI/ML model corresponding to the model ID, and feeds back a performance report corresponding to the AI/ML model.

Optional, the model ID is a candidate model ID.

Correspondingly, the step S43 specifically includes that the UE/gNB monitors one or more of one or more candidate AI/ML models corresponding to these IDs, and reports performance reports corresponding to one or more AI/ML models among the AI/ML models monitored by the UE/gNB.

Optionally, the function ID is a function ID corresponding to the performance report.

Correspondingly, the step S43 specifically includes that UE/gNB monitors the AI/ML model corresponding to the function ID, and feeds back a performance report corresponding to the AI/ML model corresponding to the function ID.

Optionally, the function ID is a candidate function ID.

Correspondingly, the step S43 specifically includes that the UE/gNB monitors one or more of one or more candidate functions corresponding to these IDs, and reports performance reports corresponding to one or more functions monitored by the UE/gNB.

The function ID can also be called type ID, scenario ID, etc. It can be used to indicate the type and/or application scenario of function, etc. Some examples of functions are: CSI compression feedback; CSI prediction; positioning; beam management; resource scheduling; indoor/outdoor; factory; city, etc.

Optionally, the UE/gNB determines the content of the performance report based on the function ID. That is, there are at least two function IDs, and the content of the performance reports corresponding to at least two function IDs is different. For example, the content of the performance report corresponding to CSI compression feedback is different from that of the performance report corresponding to positioning.

Optionally, the UE/gNB determines the reporting mode of the performance report based on the function ID. That is, there are at least two function IDs, and the reporting modes of the performance reports corresponding to at least two function IDs are different. For example, the reporting mode of the performance report corresponding to CSI compression feedback is different from that of the performance report corresponding to positioning.

Optionally, the UE/gNB determines the format of the performance report based on the function ID. That is, there are at least two function IDs, and the formats of the performance reports corresponding to at least two function IDs are different. For example, the format of the performance report corresponding to CSI compression feedback is different from that of the performance report corresponding to positioning.

Of course, the present disclosure is also applicable to scenarios where the content/format/reporting mode of performance reports corresponding to different function IDs are the same. In this case, the UE does not need to determine the content/format/reporting mode of the performance report based on the function ID.

(3) Information for indicating reference signal resources corresponding to the model monitoring.

Optionally, the first signaling indicates a first reference signal resource for model monitoring. The UE/gNB performs model monitoring based on a reference signal corresponding to the first reference signal resource. The first reference signal resource may be a UL-SRS resource, etc. Of course, the first reference signal resource may also be other reference signal resources that can be used for positioning.

The third party entity/base station may also configure a dedicated reference signal resource used for model monitoring. That is, there is a type of reference signal resource, which is a dedicated reference signal resource used for model monitoring. That is, the first reference signal resource is a dedicated reference signal resource.

Optionally, the information for indicating the reference signal resource corresponding to the model monitoring is included in the configuration/indication/trigger information of the first reference signal resource. For example, the configuration/indication/trigger information of the first reference signal resource includes an identifier/information field for indicating that the first reference signal resource is used for model monitoring. At this point, it can be considered that the first signaling includes the configuration/indication/trigger information of the first reference signal resource.

The information in the first signaling used to instruct the UE/gNB to perform model monitoring and the information used to indicate the first reference signal resource, may be carried through the same message/information field/signaling, or may be carried through different messages/information fields/signaling.

For example, the signaling used to indicate that the first reference signal resource is used for the model monitoring is the configuration signaling/trigger signaling/indication signaling of the first reference signal resource, and the signaling used to instruct the UE/gNB to perform the model monitoring is another signaling. That is, the first signaling includes at least two signalings: the configuration signaling/trigger signaling/indication signaling of the first reference signal resource, and the signaling used to instruct the UE/gNB to perform the model monitoring.

For another example, the first signaling is a configuration signaling/trigger signaling/indication signaling of the first reference signal resource, and the signaling simultaneously indicates that the first reference signal resource is used for the model monitoring, and instructs the UE/gNB to perform the model monitoring. That is, when the UE/gNB receives the signaling, the UE needs to use the first reference signal resource for model monitoring in response to the signaling.

(4) Information for indicating transmission location/channel with position-related information/time measurement-related information/angle measurement-related information corresponding to model monitoring.

Similar to (3), the information used to instruct the UE/gNB to perform model monitoring and the information used to indicate the transmission location/channel with the location-related information/time measurement quantity-related information/angle measurement quantity-related information, may be carried through the same message/information field/signaling, or may be carried through different messages/information fields/signaling.

The step S43 may specifically include that the UE/gNB may determine, based on the transmission location with the location-related information/time measurement-related information/angle measurement, performing model monitoring on the AI/ML model corresponding to the location. The UE/gNB monitors the performance of the AI/ML model and transmits a corresponding performance report to the third-party entity.

Alternatively, the step S43 may specifically include that the UE/gNB may determine, based on the channel with the location-related information/time measurement-related information/angle measurement-related information, performing model monitoring on the AI/ML model corresponding to the channel. The UE/gNB monitors the performance of the AI/ML model and transmits a corresponding performance report to the third-party entity.

(5) Indicating time information corresponding to model monitoring/model performance reporting.

Similar to (3), the information used to instruct the UE/gNB to perform model monitoring and the information used to indicate the time corresponding to the model monitoring/model performance report, can be carried through the same message/information field/signaling, or can be carried through different messages/information fields/signaling.

The time information may include one or more of: a starting time, an end time and a duration used for in indicated model monitoring, a time domain resource corresponding to the model monitoring, a time-frequency resource corresponding to the model monitoring, a period, and an effective time of a signaling for instructing the UE/gNB to perform the model monitoring; and/or,

one or more of transmission occasion of an indicated performance report, time domain resources corresponding to the performance report, time-frequency resources corresponding to the performance report, a period corresponding to the performance report, and a channel corresponding to the performance report.

The UE/gNB may determine, based on the time information, the time to perform the model monitoring, and/or the time to feedback the model performance report.

For example, the UE/gNB determines the starting time of the model monitoring based on the time information, and the UE/gNB performs the model monitoring from the starting time/after the starting time. For another example, the UE/gNB determines the end time of the model monitoring based on the time information, performs the model monitoring before the end time, and no longer performs the model monitoring after the end time. For another example, the UE/gNB determines the period of the model monitoring based on the time information, and performs the model monitoring according to the period.

Optionally, the time information is information for indicating a reference time point.

The UE/gNB performs model monitoring based on a signal at the reference time point/performs model monitoring based on a signal before the reference time point/performs model monitoring based on a signal after the reference time point; and/or,

The UE/gNB transmits a model performance report at the reference time point/transmits a model performance report before the reference time point/transmits a model performance report after the reference time point.

Optionally, the information for indicating the reference time point indicates two reference time points, one for indicating the starting time of model monitoring/transmitting model performance report, and the other for indicating the end time of model monitoring/transmitting model performance report.

Optionally, the information is information for indicating reference resource information corresponding to model monitoring (reference resource information is used to indicate reference resources).

The reference resource may be used to indicate a time point, for example, the UE/gNB performs model monitoring based on a reference signal resource on/starting from/after the reference resource.

The time information may include: a starting time, a duration, a period, etc. For example, the time information may be time period information, for example, indicating a time period in which the UE/gNB performs model monitoring.

(6) information for indicating content of a performance report and/or a format of the performance report.

Similar to (3), the information used to instruct the UE/gNB to perform model monitoring and the information used to indicate the content included in the performance report, and/or the format of the performance report, can be carried by the same message/information field/signaling, or by different messages/information fields/signaling.

The format of the model performance report includes one or more of an encoding mode of the model performance report, and information fields included in the model performance.

The UE/gNB may determine the content included in the performance report based on the information. Then, the UE/gNB may include the content when transmitting the performance report.

Based on the information, the UE/gNB can determine the format of the performance report, and transmit the content of the performance report based on the format.

As described above, optionally, the same signaling is used to indicate one or more of the above information.

Optionally, at least two items of the above information are indiated through different signaling indications (for example, one is indicated by MAC CE and the other is indicated by RRC; for another example, one is indicated by one MAC CE and the other is indicated by another MAC CE; for another example, one is indicated by one RRC parameter and the other is indicated by another RRC parameter).

The signaling may be one or more of RRC signaling/MAC-CE signaling/DCI signaling.

The present disclosure can be applicable to the scenario where N>=1 models, that is, one message can instruct the UE/gNB to perform performance monitoring of one model (N=1), or one message can instruct the UE/gNB to perform performance monitoring of multiple models (N>1). The first AI/ML model can be one AI model or multiple AI models.

The first signaling in the present disclosure may be for a certain AI model, for example, instructing the UE/gNB to perform performance monitoring of the first AI model; it may also be for a certain function, for example, instructing the UE/gNB to perform model monitoring of AI-based positioning; it may also be for a certain scenario, for example, instructing the UE/gNB to perform model monitoring of AI-based direct positioning in a certain scenario.

Some options that can be used individually or together are described hereinafter.

Optionally, the UE/gNB performs model monitoring based on the first signaling in a way including: performing model monitoring starting from/after a moment of the first signaling plus K first-time units (such as slots, symbols, etc.), where K is an integer greater than or equal to 0.

Optionally, K may be indicated by the base station (one way is that K is indicated by the above information for indicating the time information corresponding to the indication model monitoring/model performance report included in the first signaling), or agreed upon by the protocol, or determined by the UE; K may also be determined based on the UE capability; or, K may be a first reference signal resource (PRS resource) used for model monitoring after the first signaling.

The moment where the first signaling is located, may include:
a second-time unit in which the first signaling is transmitted; for example, the slot in which the first signaling is transmitted;
a last second-time unit in which the first signaling is transmitted; for example, the last lot/symbol in which the first signaling is transmitted;
a first second-time unit in which the first signaling is transmitted; for example, a first slot/symbol in which the first signaling is transmitted;
Units of the first-time unit and the second-time unit are the same or different.

Examples of units of the first-time unit may be a slot, a symbol, a subframe, a frame, etc.

Examples of units of the second-time unit may be a slot, a symbol, a subframe, a frame, etc.

In an optional manner, the UE/gNB determines a time corresponding to model monitoring based on the first signaling, and performs model monitoring based on the time.

In an optional manner, the UE/gNB determines the AI/ML model corresponding to the model monitoring based on the first signaling, and uses the AI/ML model to perform model monitoring.

In an optional manner, the UE/gNB determines the reference signal/reference signal resource corresponding to the model monitoring based on the first signaling, and performs model monitoring based on the reference signal/reference signal resource.

In an optional manner, the UE determines position-related information/time measurement-related information/angle measurement-related information based on position coordinates obtained based on the global positioning system GPS, the global navigation satellite system GNSS, traditional positioning approaches, base station indications (which can be applicable to PRU), etc., and performs model monitoring based on the position-related information/time measurement-related information/angle measurement.

In an optional manner, the UE performs AI/ML model monitoring based on the determined location-related information/time measurement-related information/angle measurement-related information and the output of the AI/ML model, and monitors the feedback performance report based on the model.

In an optional manner, the gNB obtains time measurement quantity related information/angle measurement quantity related information based on the UL-SRS sent by the UE, and performs model monitoring based on the time measurement quantity related information/angle measurement quantity.

In an optional manner, the gNB performs AI/ML model monitoring based on the determined time measurement quantity related information/angle measurement quantity related information and the output of the AI/ML model, and feedbacks a performance report based on the model monitoring.

It is to be noted that the above embodiments are schemes for monitoring CSI feedback and positioning approaches. The monitoring and positioning of beam management, channel estimation and scheduling approaches are similar to CSI feedback or CSI determination, and will not be repeated here.

As shown in FIG. 6, one embodiment of the present disclosure further provides a communication device. The communication device is a first communication device and includes a memory 620, a transceiver 600 and a processor 610. The memory 620 is used to store program instructions. The transceiver 600 is used to transmit and receive data under the control of the processor 610. The processor 610 is used to read the program instructions in the memory 620, and the transceiver 600 is used to perform the following operations:
receiving a first signaling transmitted by a second communication device; where the first signaling is used for monitoring for the target object, and the target object includes a first model and/or a first approach;
determining a performance report for the target object based on the first signaling; and transmitting the performance report to the second communication device.

The first model is used for determining and/or feeding back channel state information CSI, or for positioning, or for beam management, or for channel estimation, or for scheduling.

The first approach includes an approach for determining and/or feeding back CSI, or a positioning approach, or a beam management approach, or a channel estimation approach, or a scheduling approach.

In FIG. 6, a bus architecture may include any number of interconnected bus and bridge. Specifically, various circuits of one or more processors, which are represented by the processor 610, and one or more memories, which are represented by the memory 620, are linked together. The bus architecture may link various other circuits, such as a peripheral device, voltage regulator and a power management circuit together. These features are well known in this field; therefore, the present disclosure does not make further description on these features. The bus interface provides an interface. The transceiver 600 may be multiple elements, including a transmitter and a receiver and provide units, which communicate with other devices on the transmission medium. The transmission medium includes transmission media such as wireless channels, wired channels, and optical cables. When the first communication device is a UE, for different UEs, the UE may include a user interface 630. The user interface 630 may be an interface that can be connected to external or internal devices. The connected devices include but are not limited to a small keyboard, a display, a speaker, a microphone, a joystick, etc.

The processor 610 is responsible for managing the bus architecture and the normal processing. The memory 620 may be used to store data used by the processor 610 for performing operations.

Optionally, the processor 610 may be a central processing unit (CPU), an application specific integrated circuit (ASIC), a field-programmable gate array (FPGA) or a complex programmable logic device (CPLD). The processor 610 may also adopt multi-core architecture.

The processor 610 calls the computer program stored in the memory to execute any of the methods provided by the embodiments of the present disclosure according to obtained executable instructions. The processor 610 and the memory 620 may also be arranged physically separately.

Optionally, the first signaling includes at least one of the following information:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object; or,
eighth indication information used to instruct the first communications device to transmit a CSI report corresponding to the monitoring for the target object.

Optionally, the first indication information is activating information or enabling information for the target object.

Optionally, the processor 610 further performs:
based on a target object determined by the identifier information, determining a performance report for the target object.

Optionally, the reference signal resource is a reference signal resource used to monitor for a target object; or,
the second indication information is included in the first information; where the first information is one of the following information:
configuration information of reference signal resource;
indication information of reference signal resource;
trigger information of reference signal resource.

Optionally, the processor 610 further performs:
determining a performance report for the target object according to a first reference signal corresponding to the reference signal resource.

Optionally, the processor 610 further performs:
determining a first CSI based on the first reference signal;
evaluating a performance for the target object according to the first CSI;
determining a performance report for the target object according to the performance for the target object.

Optionally, the processor 610 further performs:
determining a performance report for the target object according to the target object determined by the transmission position of the second CSI; or,
receiving, at the transmission position of the second CSI, the second CSI corresponding to the target object; determining, based on the received second CSI, a performance report for the target object; or,
based on the transmission position of the second CSI, determining a second CSI corresponding to the target object; based on the received second CSI, determining a performance report for the target object.

Optionally, the processor 610 further performs:
according to a target object determined by the channel carrying the second CSI, determining a performance report for the target object; or,
receiving a second CSI corresponding to the target object on a channel carrying the second CSI; determining a performance report for the target object based on the received second CSI; or,
based on the channel carrying the second CSI, determining a second CSI corresponding to the target object; based on the received second CSI, determining a performance report for the target object.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, where the first reference resource is used to indicate a time point.

Optionally, the processor 610 further performs:
determining a performance report for the target object based on the fifth indication information.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the CSI report is a CSI report for monitoring for the target object; or,
the seventh indication information and/or the eighth indication information is included in the second information; where the second information is one of the following information:
configuration information of CSI report;
indication information of CSI report;
trigger information of CSI report.

Optionally, the processor 610 further performs:
determining third information corresponding to the CSI report, where the third information includes a target object, or a reference signal resource, or a reference signal;
determining a performance report for the target object according to the third information.

Optionally, the processor 610 further performs:
receiving a second CSI based on the first signaling, where the second CSI corresponds to the first CSI sent by the first communication device;
determining a performance report for the target object according to the received second CSI.

Optionally, the processor 610 further performs:
receiving a second reference signal based on the first signaling, where the second reference signal corresponds to the first CSI sent by the first communication device;
determining a performance report for the target object according to the received second reference signal.

Optionally, the processor 610 further performs:
determining a performance report for the target object at a beginning of target time or after the target time, where the target time is a moment where the first signaling is located or a moment offset by K first-time units from the moment where the first signaling is located, where K is an integer greater than or equal to 0.

Optionally, the moment where the first signaling is located includes one of the following:
a second-time unit in which the first signaling is transmitted;
a last second-time unit in which the first signaling is transmitted;
a first second-time unit in which the first signaling is transmitted.

Optionally, K is indicated by the network, or agreed upon by a protocol, or determined by the first communication device, or determined according to capability of the first communication device.

Optionally, the processor 610 further performs:
starting from the time corresponding to the first reference signal resource used for the monitoring for the target object after the first signaling, determining a performance report for the target object.

Optionally, the first model is used to determine and/or feed back the CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information.

The positioning-related information includes one or more of the following:
location-related information;
time-related information;
angle related information;
energy related information;
Line of sight LOS indication information;
Non-line-of-sight NLOS indication information.

Optionally, the first model is used for beam management, and the first model is a model for determining beam-related information; the beam-related information includes one or more of the following:
beam identifier ID;
beam quality information;
beam sorting information.

Optionally, the first communication device is a UE, and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing a target object.

According to the communication device of the embodiment of the present disclosure, by receiving a first signaling transmitted by a second communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and then determining a performance report for the target object based on the first signaling, and finally transmitting the performance report to the second communication device, performance monitoring of the model or method in the communication system can be achieved, thereby improving the performance of the communication system.

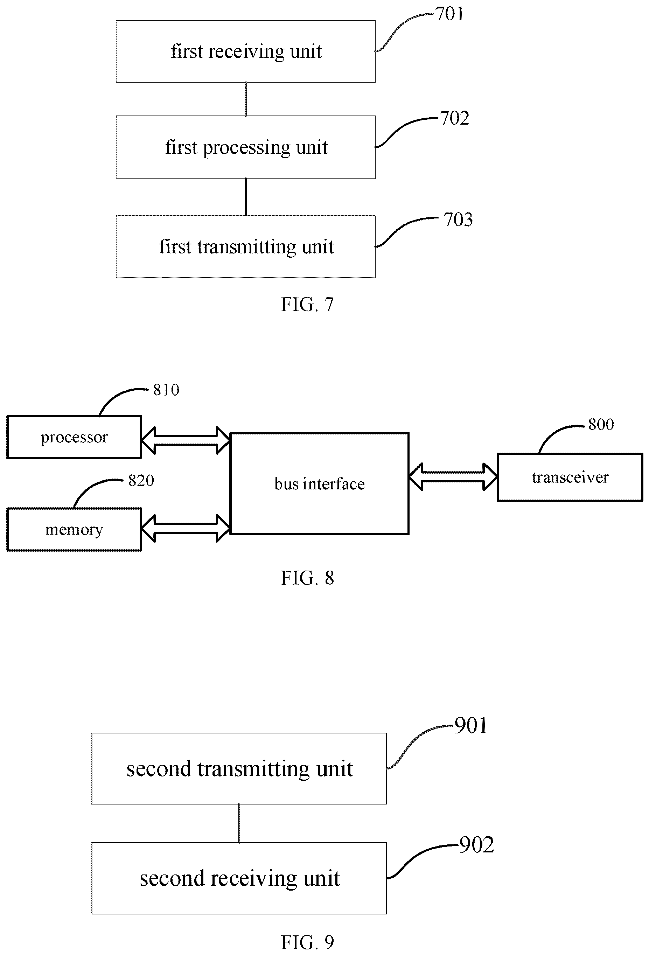

As shown in FIG. 7, one embodiment of the present disclosure further provides an information transmission device, including:
a first receiving unit 701 used to receive a first signaling transmitted by a second communication device; where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach;
a first processing unit 702 used to determine a performance report for the target object based on the first signaling;
a first transmitting unit 703 used to transmit the performance report to the second communication device.

Optionally, the first signaling includes at least one of the following information:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object; or,
eighth indication information used to instruct the first communications device to transmit a CSI report corresponding to the monitoring for the target object.

Optionally, the first indication information is activating information or enabling information for the target object.

Optionally, the first processing unit 702 is further used to perform:
based on a target object determined by the identifier information, determining a performance report for the target object.

Optionally, the reference signal resource is a reference signal resource used to monitor for a target object; or,
the second indication information is included in the first information; where the first information is one of the following information:
configuration information of reference signal resource;
indication information of reference signal resource;
trigger information of reference signal resource.

Optionally, the first processing unit 702 is further used to perform:
determining a performance report for the target object according to a first reference signal corresponding to the reference signal resource.

Optionally, the first processing unit 702 is further used to perform:
determining a first CSI based on the first reference signal;
evaluating a performance for the target object according to the first CSI;
determining a performance report for the target object according to the performance for the target object.

Optionally, the first processing unit 702 is further used to perform:
determining a performance report for the target object according to the target object determined by the transmission position of the second CSI; or,
receiving, at the transmission position of the second CSI, the second CSI corresponding to the target object; determining, based on the received second CSI, a performance report for the target object; or,
based on the transmission position of the second CSI, determining a second CSI corresponding to the target object; based on the received second CSI, determining a performance report for the target object.

Optionally, the first processing unit 702 is further used to perform:
according to a target object determined by the channel carrying the second CSI, determining a performance report for the target object; or,
receiving a second CSI corresponding to the target object on a channel carrying the second CSI; determining a performance report for the target object based on the received second CSI; or,
based on the channel carrying the second CSI, determining a second CSI corresponding to the target object; based on the received second CSI, determining a performance report for the target object.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, where the first reference resource is used to indicate a time point.

Optionally, the first processing unit 702 is further used to perform:
determining a performance report for the target object based on the fifth indication information.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the CSI report is a CSI report for monitoring for the target object; or,
the seventh indication information and/or the eighth indication information is included in the second information; where the second information is one of the following information:
configuration information of CSI report;
indication information of CSI report;
trigger information of CSI report.

Optionally, the first processing unit 702 is further used to perform:
determining third information corresponding to the CSI report, where the third information includes a target object, or a reference signal resource, or a reference signal;
determining a performance report for the target object according to the third information.

Optionally, the first processing unit 702 is further used to perform:
receiving a second CSI based on the first signaling, where the second CSI corresponds to the first CSI sent by the first communication device;
determining a performance report for the target object according to the received second CSI.

Optionally, the first processing unit 702 is further used to perform:
receiving a second reference signal based on the first signaling, where the second reference signal corresponds to the first CSI sent by the first communication device;
determining a performance report for the target object according to the received second reference signal.

Optionally, the first processing unit 702 is further used to perform:
determining a performance report for the target object at a beginning of target time or after the target time, where the target time is a moment where the first signaling is located or a moment offset by K first-time units from the moment where the first signaling is located, where K is an integer greater than or equal to 0.

Optionally, the moment where the first signaling is located includes one of the following:
a second-time unit in which the first signaling is transmitted;
a last second-time unit in which the first signaling is transmitted;
a first second-time unit in which the first signaling is transmitted.

Optionally, K is indicated by the network, or agreed upon by a protocol, or determined by the first communication device, or determined according to capability of the first communication device.

Optionally, the first processing unit 702 is further used to perform:
starting from the time corresponding to the first reference signal resource used for the monitoring for the target object after the first signaling, determining a performance report for the target object.

Optionally, the first model is used to determine and/or feed back the CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information.

The positioning-related information includes one or more of the following:
location-related information;
time-related information;
angle related information;
energy related information;
Line of sight LOS indication information;
Non-line-of-sight NLOS indication information.

Optionally, the first model is used for beam management, and the first model is a model for determining beam-related information; the beam-related information includes one or more of the following:
beam identifier ID;
beam quality information;
beam sorting information.

Optionally, the first communication device is a UE, and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing a target object.

According to the information transmission device of the embodiment of the present disclosure, by receiving a first signaling transmitted by a second communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and then determining a performance report for the target object based on the first signaling, and finally transmitting the performance report to the second communication device, performance monitoring of the model or method in the communication system can be achieved, thereby improving the performance of the communication system.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to perform:
receiving a first signaling transmitted by a second communication device; where the first signaling is used for monitoring for the target object, and the target object includes a first model and/or a first approach;
determining a performance report for the target object based on the first signaling; and
transmitting the performance report to the second communication device.

The first model is used for determining and/or feeding back channel state information CSI, or for positioning, or for beam management, or for channel estimation, or for scheduling.

The first approach includes an approach for determining and/or feeding back CSI, or a positioning approach, or a beam management approach, or a channel estimation approach, or a scheduling approach.

When the program instructions are executed by the processor, all implementation methods of the method embodiment applied to the communication device side as shown in FIG. 4 can be implemented, which will not be described here to avoid repetition.

As shown in FIG. 8, one embodiment of the present disclosure further provides a communication device. The communication device is a second communication device and includes a memory 820, a transceiver 800 and a processor 810. The memory 820 is used to store program instructions. The transceiver 800 is used to transmit and receive data under the control of the processor 810. The processor 810 is used to read the program instructions in the memory 620 to perform the following operations:
transmitting a first signaling to a first communication device, where the first signaling is used for monitoring for the target object, and the target object includes a first model and/or a first approach;
receiving a performance report for the target object determined by the first communication device based on the first signaling;
where the first model is used for determining and/or feeding back channel state information CSI, or for positioning, or for beam management, or for channel estimation, or for scheduling.

The first approach includes an approach for determining and/or feeding back CSI, or a positioning approach, or a beam management approach, or a channel estimation approach, or a scheduling approach.

In FIG. 8, a bus architecture may include any number of interconnected bus and bridge. Specifically, various circuits of one or more processors, which are represented by the processor 810, and one or more memories, which are represented by the memory 820, are linked together. The bus architecture may link various other circuits, such as a peripheral device, voltage regulator and a power management circuit together. These features are well known in this field; therefore, the present disclosure does not make further description on these features. The bus interface provides an interface. The transceiver 800 may be multiple elements, including a transmitter and a receiver and provide units, which communicate with other devices on the transmission medium. The transmission medium includes transmission media such as wireless channels, wired channels, and optical cables. The processor 810 is responsible for managing the bus architecture and the normal processing. The memory 820 may be used to store data used by the processor 810 for performing operations.

The processor 810 may be a central processing unit (CPU), an application specific integrated circuit (ASIC), a field-programmable gate array (FPGA) or a complex programmable logic device (CPLD). The processor may also adopt multi-core architecture.

Optionally, the first signaling includes at least one of the following information:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

Optionally, the first indication information is activating information or enabling information for the target object.

Optionally, the reference signal resource is a reference signal resource used to monitor for a target object; or,
the second indication information is included in the first information; where the first information is one of the following information:
configuration information of reference signal resource;
indication information of reference signal resource;
trigger information of reference signal resource.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, where the first reference resource is used to indicate a time point.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the CSI report is a CSI report for monitoring for the target object; or,
the seventh indication information and/or the eighth indication information is included in the second information; where the second information is one of the following information:
configuration information of CSI report;
indication information of CSI report;
trigger information of CSI report.

Optionally, the first model is used to determine and/or feed back the CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information.

The positioning-related information includes one or more of the following:
location-related information;
time-related information;
angle related information;
energy related information;
Line of sight LOS indication information;
Non-line-of-sight NLOS indication information.

Optionally, the first model is used for beam management, and the first model is a model for determining beam-related information; the beam-related information includes one or more of the following:
beam identifier ID;
beam quality information;
beam sorting information.

Optionally, the first communication device is a UE, and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing a target object.

According to the communication device of the embodiment of the present disclosure, a first signaling is sent to a first communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and a performance report for the target object determined by the first communication device based on the first signaling is received. In this way, performance monitoring of the model or method in the communication system can be achieved, thereby improving the performance of the communication system.

As shown in FIG. 9, one embodiment of the present disclosure further provides an information transmission device, including:
a second transmitting unit 901 used to transmit a first signaling to a first communication device, where the first signaling is used for monitoring for the target object, and the target object includes a first model and/or a first approach;
a second receiving unit 902 used to receive a performance report for the target object determined by the first communication device based on the first signaling;
where the first model is used for determining and/or feeding back channel state information CSI, or for positioning, or for beam management, or for channel estimation, or for scheduling.

The first approach includes an approach for determining and/or feeding back CSI, or a positioning approach, or a beam management approach, or a channel estimation approach, or a scheduling approach.

Optionally, the first signaling includes at least one of the following information:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object

Optionally, the first indication information is activating information or enabling information for the target object.

Optionally, the reference signal resource is a reference signal resource used to monitor for a target object; or,
the second indication information is included in the first information; where the first information is one of the following information:
configuration information of reference signal resource;
indication information of reference signal resource;
trigger information of reference signal resource.

Optionally, the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, where the first reference resource is used to indicate a time point.

Optionally, the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

Optionally, the CSI report is a CSI report for monitoring for the target object; or,
the seventh indication information and/or the eighth indication information is included in the second information; where the second information is one of the following information:
configuration information of CSI report;
indication information of CSI report;
trigger information of CSI report.

Optionally, the first model is used to determine and/or feed back the CSI, and the first model includes one or more of the following:
a model for determining CSI sent by the first communication device to the second communication device;
a model for determining CSI based on CSI sent by the first communications device to the second communications device.

Optionally, the first model is used for positioning, and the first model is a model used to determine positioning-related information.

The positioning-related information includes one or more of the following:
location-related information;
time-related information;
angle related information;
energy related information;
Line of sight LOS indication information;
Non-line-of-sight NLOS indication information.

Optionally, the first model is used for beam management, and the first model is a model for determining beam-related information; the beam-related information includes one or more of the following:
beam identifier ID;
beam quality information;
beam sorting information.

Optionally, the first communication device is a UE, and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing a target object.

According to the information transmission device of the embodiment of the present disclosure, a first signaling is sent to a first communication device, where the first signaling is used for monitoring for the target object, and the target object includes a first model and/or a first approach, the first model is used for determining and/or feeding back channel state information CSI, or for positioning, or for beam management, or for channel estimation, or for scheduling; the first approach includes an approach for determining and/or feeding back CSI, or a positioning approach, or a beam management approach, or a channel estimation approach, or a scheduling approach; and a performance report for the target object determined by the first communication device based on the first signaling is received. In this way, performance monitoring of the model or method in the communication system can be achieved, thereby improving the performance of the communication system.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to perform:
transmitting a first signaling to a first communication device, where the first signaling is used for monitoring for the target object, and the target object includes a first model and/or a first approach;
receiving a performance report for the target object determined by the first communication device based on the first signaling;
where the first model is used for determining and/or feeding back channel state information CSI, or for positioning, or for beam management, or for channel estimation, or for scheduling.

The first approach includes an approach for determining and/or feeding back CSI, or a positioning approach, or a beam management approach, or a channel estimation approach, or a scheduling approach.

When the program instructions are executed by the processor, all implementation methods of the method embodiment applied to the communication device side as shown in FIG. 5 can be implemented, which will not be described here to avoid repetition.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, or subscriber unit, or subscriber station, or mobile station, or mobile, or remote station, or access point, or remote terminal, or access terminal, or user terminal, or user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), or a NodeB in wideband code division multiple access (WCDMA), or an evolutional Node B (eNB or e-NodeB) in long term evolution (LTE) system, or a 5G base station (gNB) in the 5G network architecture (next generation system), or a home evolved Node B (HeNB), or a relay node, or a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Those skilled in the art should understand that the embodiments of the present application may be provided as methods, or systems, or computer program products. Accordingly, in this application, an entirely hardware embodiment, or an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing apparatus to create a machine, so that instructions executable by the processor of the computer or the other programmable data processing apparatus may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information transmission method, applied to a first communication device, comprising:
receiving a first signaling transmitted by a second communication device; wherein the first signaling is used for monitoring for a target object, and the target object includes a first model and/or a first approach;
determining a performance report for the target object based on the first signaling; and
transmitting the performance report to the second communication device;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

2. The method according to claim 1, wherein the first signaling includes at least one of the following:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

3. The method according to claim 2, wherein the first indication information is activating information or enabling information for the target object.

4. The method according to claim 2, wherein the determining a performance report for the target object based on the first signaling, includes:
determining the performance report for the target object, based on a target object determined by the identifier information.

5. The method according to claim 2, wherein the reference signal resource is a reference signal resource used to monitor for the target object; or,
the second indication information is included in the first information; wherein the first information is one of the following information:
configuration information for the reference signal resource;
indication information for the reference signal resource; or,
trigger information for the reference signal resource.

6. The method according to claim 2, wherein the determining a performance report for the target object based on the first signaling, includes:
determining the performance report for the target object according to a first reference signal corresponding to the reference signal resource.

7. The method according to claim 6, wherein the determining the performance report for the target object according to a first reference signal corresponding to the reference signal resource, includes:
determining a first CSI based on the first reference signal;
evaluating a performance for the target object according to the first CSI;
determining the performance report for the target object according to the performance for the target object.

8. The method according to claim 2, wherein the determining a performance report for the target object based on the first signaling, includes:
determining the performance report for the target object, according to a target object determined by the transmission position of the second CSI; or,
receiving, at the transmission position of the second CSI, the second CSI corresponding to the target object; determining, based on the received second CSI, the performance report for the target object; or,
determining the second CSI corresponding to the target object, based on the transmission position of the second CSI; determining a performance report for the target object, based on the received second CSI.

9. The method according to claim 2, wherein the determining a performance report for the target object based on the first signaling, includes:
determining the performance report for the target object, according to a target object determined by a channel carrying the second CSI; or,
receiving a second CSI corresponding to the target object on a channel carrying the second CSI; determining the performance report for the target object based on the received second CSI; or,
determining a second CSI corresponding to the target object, based on a channel carrying the second CSI; determining the performance report for the target object, based on the determined second CSI.

10. The method according to claim 2, wherein the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, wherein the first reference resource is used to indicate a time point.

11. The method according to claim 2, wherein the determining a performance report for the target object based on the first signaling, includes:
determining the performance report for the target object based on the fifth indication information.

12. The method according to claim 2, wherein the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

13. The method according to claim 2, wherein the CSI report is a CSI report for the monitoring for the target object; or,
the seventh indication information and/or the eighth indication information is included in the second information; wherein the second information is one of the following information:
configuration information for the CSI report;
indication information for the CSI report;
trigger information for the CSI report.

14. The method according to claim 2, wherein the determining a performance report for the target object based on the first signaling, includes:
determining third information corresponding to the CSI report, wherein the third information includes a target object, or a reference signal resource, or a reference signal;
determining a performance report for the target object according to the third information.

15. The method according to claim 1 or 2, wherein the determining a performance report for the target object based on the first signaling, includes:
receiving a second CSI based on the first signaling, wherein the second CSI corresponds to the first CSI sent by the first communication device;
determining the performance report for the target object according to the received second CSI.

16. The method according to claim 1 or 2, wherein the determining a performance report for the target object based on the first signaling, includes:
receiving a second reference signal based on the first signaling, wherein the second reference signal corresponds to the first CSI sent by the first communication device;
determining the performance report for the target object according to the received second reference signal.

17. The method according to claim 1, wherein the determining a performance report for the target object based on the first signaling, includes:
determining a performance report for the target object at the beginning of target time or after the target time, wherein the target time is a moment where the first signaling is located or a moment offset by K first-time units from the moment where the first signaling is located, where K is an integer greater than or equal to 0.

18. The method according to claim 17, wherein the moment where the first signaling is located includes one of the following:
a second-time unit in which the first signaling is transmitted;
a last second-time unit in which the first signaling is transmitted; or
a first second-time unit in which the first signaling is transmitted.

19. The method according to claim 17, wherein K is indicated by network, or agreed upon by a protocol, or determined by the first communication device, or determined according to capability of the first communication device.

20. The method according to claim 1, wherein the determining a performance report for the target object based on the first signaling, includes:
determining the performance report for the target object, at starting from the time corresponding to the first reference signal resource used for the monitoring for the target object after the first signaling.

21. The method according to claim 1, wherein the first model is used to determine and/or feed back the CSI, and the first model includes one or more of the following:
a model for determining CSI sent by the first communication device to the second communication device;
a model for determining CSI based on CSI sent by the first communications device to the second communications device.

22. The method according to claim 1, wherein the first model is used for positioning, and the first model is a model used to determine positioning-related information;
the positioning-related information includes one or more of the following:
location-related information;
time-related information;
angle related information;
energy related information;
line of sight LOS indication information;
non-line-of-sight NLOS indication information.

23. The method according to claim 1, wherein the first model is used for beam management, and the first model is a model for determining beam-related information; the beam-related information includes one or more of the following:
beam identifier ID;
beam quality information;
beam sorting information.

24. The method according to claim 1, wherein the first communication device is a user equipment (UE), and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing the target object.

25. An information transmission method, applied to a second communication device, comprising:
transmitting a first signaling to a first communication device, wherein the first signaling is used for monitoring for a target object, and the target object includes a first model and/or a first approach;
receiving a performance report for the target object determined by the first communication device based on the first signaling;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

26. The method according to claim 25, wherein the first signaling includes information indicating at least one of the following:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

27. The method according to claim 26, wherein the first indication information is activating information or enabling information for the target object.

28. The method according to claim 26, wherein the reference signal resource is a reference signal resource used to monitor for the target object; or,
the second indication information is included in the first information; wherein the first information is one of the following information:
configuration information for the reference signal resource;
indication information for the reference signal resource; or,
trigger information for the reference signal resource.

29. The method according to claim 26, wherein the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, wherein the first reference resource is used to indicate a time point.

30. The method according to claim 26, wherein the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

31. The method according to claim 26, wherein the CSI report is a CSI report for monitoring for the target object; or,
the seventh indication information and/or the eighth indication information is included in the second information; wherein the second information is one of the following information:
configuration information for the CSI report;
indication information for the CSI report; or,
trigger information for the CSI report.

32. The method according to claim 25, wherein the first model is used to determine and/or feed back the CSI, and the first model includes one or more of the following:
a model for determining CSI sent by the first communication device to the second communication device;
a model for determining CSI based on CSI sent by the first communications device to the second communications device.

33. The method according to claim 25, wherein the first model is used for positioning, and the first model is a model used to determine positioning-related information;
the positioning-related information includes one or more of the following:
location-related information;
time-related information;
angle related information;
energy related information;
line of sight LOS indication information;
non-line-of-sight NLOS indication information.

34. The method according to claim 25, wherein the first model is used for beam management, and the first model is a model for determining beam-related information; the beam-related information includes one or more of the following:
beam identifier ID;
beam quality information;
beam sorting information.

35. The method according to claim 25, wherein the first communication device is a user equipment (UE), and the second communication device is a base station or a third communication device; or,
the first communication device is a third communication device, and the second communication device is a base station; or,
the first communication device is a base station, the second communication device is a third communication device, and the third communication device is a local management function LMF entity, or a device used for monitoring or managing the target object.

36. A communication device being a first communication device, comprising: a memory, a transceiver, and a processor; wherein the memory is used to store program instructions; the transceiver is used to transmit and receive data under the control of the processor; the processor is used to read the program instructions in the memory and perform the following operations:
receiving a first signaling transmitted by a second communication device; wherein the first signaling is used for monitoring for a target object, and the target object includes a first model and/or a first approach;
determining a performance report for the target object based on the first signaling;
transmitting the performance report to the second communication device;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

37. The communication device according to claim 36, wherein the first signaling includes at least one of the following:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

38. The communication device according to claim 37, wherein the first indication information is activating information or enabling information for the target object.

39. The communication device according to claim 37, wherein the processor is further used to perform:
determining the performance report for the target object, based on a target object determined by the identifier information.

40. The communication device according to claim 37, wherein the reference signal resource is a reference signal resource used to monitor for the target object; or,
the second indication information is included in the first information; wherein the first information is one of the following information:
configuration information for the reference signal resource;
indication information for the reference signal resource; or,
trigger information for the reference signal resource.

41. The communication device according to claim 37, wherein the processor is further used to perform:
determining the performance report for the target object according to a first reference signal corresponding to the reference signal resource.

42. The communication device according to claim 41, wherein the processor is further used to perform:
determining a first CSI based on the first reference signal;
evaluating a performance for the target object according to the first CSI;
determining the performance report for the target object according to the performance for the target object.

43. The communication device according to claim 37, wherein the processor is further used to perform:
according to a target object determined by the transmission position of the second CSI, determining the performance report for the target object; or,
receiving, at the transmission position of the second CSI, the second CSI corresponding to the target object; determining, based on the received second CSI, the performance report for the target object; or,
determining the second CSI corresponding to the target object, based on the transmission position of the second CSI; determining a performance report for the target object, based on the received second CSI.

44. The communication device according to claim 37, wherein the processor is further used to perform:
determining the performance report for the target object, according to a target object determined by a channel carrying the second CSI; or,
receiving a second CSI corresponding to the target object on a channel carrying the second CSI; determining the performance report for the target object based on the received second CSI; or,
determining a second CSI corresponding to the target object, based on a channel carrying the second CSI; determining the performance report for the target object, based on the received second CSI.

45. The communication device according to claim 37, wherein the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, wherein the first reference resource is used to indicate a time point.

46. The communication device according to claim 37, wherein the processor is further used to perform:
determining the performance report for the target object based on the fifth indication information.

47. The communication device according to claim 37, wherein the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

48. The communication device according to claim 37, wherein the CSI report is a CSI report for the monitoring for the target object; or,
the seventh indication information and/or the eighth indication information is included in the second information; wherein the second information is one of the following information:
configuration information for the CSI report;
indication information for the CSI report; or,
trigger information for the CSI report.

49. The communication device according to claim 37, wherein the processor is further used to perform:
determining third information corresponding to the CSI report, wherein the third information includes a target object, or a reference signal resource, or a reference signal;
determining a performance report for the target object according to the third information.

50. The communication device according to claim 36 or 37, wherein the processor is further used to perform:
receiving a second CSI based on the first signaling, wherein the second CSI corresponds to the first CSI sent by the first communication device;
determining the performance report for the target object according to the received second CSI.

51. The communication device according to claim 36 or 37, wherein the processor is further used to perform:
receiving a second reference signal based on the first signaling, wherein the second reference signal corresponds to the first CSI sent by the first communication device;
determining the performance report for the target object according to the received second reference signal.

52. The communication device according to claim 37, wherein the processor is further used to perform:
determining a performance report for the target object at the beginning of target time or after the target time, wherein the target time is a moment where the first signaling is located or a moment offset by K first-time units from the moment where the first signaling is located, where K is an integer greater than or equal to 0.

53. The communication device according to claim 52, wherein the moment where the first signaling is located includes one of the following:
a second-time unit in which the first signaling is transmitted;
a last second-time unit in which the first signaling is transmitted; or,
a first second-time unit in which the first signaling is transmitted.

54. The communication device according to claim 52, wherein K is indicated by network, or agreed upon by a protocol, or determined by the first communication device, or determined according to capability of the first communication device.

55. The communication device according to claim 36, wherein the processor is further used to perform:
determining the performance report for the target object, at starting from the time corresponding to the first reference signal resource used for the monitoring for the target object after the first signaling.

56. The communication device according to claim 36, wherein the first model is used to determine and/or feed back the CSI, and the first model includes one or more of the following:
a model for determining CSI sent by the first communication device to the second communication device;
a model for determining CSI based on CSI sent by the first communications device to the second communications device.

57. The communication device according to claim 36, wherein the first model is used for positioning, and the first model is a model used to determine positioning-related information;
the positioning-related information includes one or more of the following:
location-related information;
time-related information;
angle related information;
energy related information;
line of sight LOS indication information;
non-line-of-sight NLOS indication information.

58. The communication device according to claim 36, wherein the first model is used for beam management, and the first model is a model for determining beam-related information; the beam-related information includes one or more of the following:
beam identifier ID;
beam quality information;
beam sorting information.

59. An information transmission device, comprising:
a first receiving unit configured to receive a first signaling transmitted by a second communication device; wherein the first signaling is used for monitoring for a target object, and the target object includes a first model and/or a first approach;
a first processing unit configured to determine a performance report for the target object based on the first signaling;
a first transmitting unit configured to transmit the performance report to the second communication device.

60. A communication device being a second communication device, comprising: a memory, a transceiver, and a processor; wherein the memory is used to store program instructions; the transceiver is used to transmit and receive data under the control of the processor; the processor is used to read the program instructions in the memory and perform the following operations:
transmitting a first signaling to a first communication device, wherein the first signaling is used for monitoring for a target object, and the target object includes a first model and/or a first approach;
receiving a performance report for the target object determined by the first communication device based on the first signaling;
wherein the first model is used for determining and/or feeding back channel state information CSI, or for positioning, for beam management, or for channel estimation, or for scheduling;
the first approach includes an approach for determining and/or feeding back CSI, or a positioning approach, or a beam management approach, or a channel estimation approach, or a scheduling approach.

61. The communication device according to claim 60, wherein the first signaling includes information indicating at least one of the following:
first indication information used to instruct the first communication device to perform the monitoring for the target object;
identifier information;
second indication information used to indicate a reference signal resource;
third indication information used to indicate transmission position of a second CSI;
fourth indication information used to indicate a channel carrying the second CSI;
fifth indication information used to indicate a first time corresponding to the monitoring for the target object;
sixth indication information used to indicate a second time corresponding to the performance report for the target object;
seventh indication information used to indicate a CSI report corresponding to the monitoring for the target object;
eighth indication information used to instruct the first communications device to transmit a CSI report corresponding to the monitoring for the target object; or,
ninth indication information used to indicate one or more of content, format and reporting mode of the performance report for the target object.

62. The communication device according to claim 61, wherein the first indication information is activating information or enabling information for the target object.

63. The communication device according to claim 61, wherein the reference signal resource is a reference signal resource used to monitor for the target object; or,
the second indication information is included in the first information; wherein the first information is one of the following information:
configuration information for the reference signal resource;
indication information for the reference signal resource; or,
trigger information for the reference signal resource.

64. The communication device according to claim 61, wherein the fifth indication information includes one or more of the following:
information for indicating a starting time corresponding to the monitoring for the target object;
information for indicating an end time corresponding to the monitoring for the target object;
information for indicating a duration corresponding to the monitoring for the target object;
information for indicating a time domain resource corresponding to the monitoring for the target object;
information for indicating a time-frequency resource corresponding to the monitoring for the target object;
information for indicating a period corresponding to the monitoring for the target object;
information for indicating effective time of a signaling for instructing the first communication device to perform the monitoring for the target object;
first reference time point information;
information for indicating a first reference resource for the monitoring for the target object, wherein the first reference resource is used to indicate a time point.

65. The communication device according to claim 61, wherein the sixth indication information includes one or more of the following:
information for indicating a transmission occasion of the performance report;
information for indicating a time domain resource corresponding to the performance report;
information for indicating a time-frequency resource corresponding to the performance report;
information for indicating a period corresponding to the performance report;
information for indicating a channel corresponding to the performance report;
second reference time point information.

66. The communication device according to claim 61, wherein the CSI report is a CSI report for monitoring for the target object; or,
the seventh indication information and/or the eighth indication information is included in the second information; wherein the second information is one of the following information:
configuration information for the CSI report;
indication information for the CSI report; or,
trigger information for the CSI report.

67. The communication device according to claim 60, wherein the first model is used to determine and/or feed back the CSI, and the first model includes one or more of the following:
a model for determining CSI sent by the first communication device to the second communication device;
a model for determining CSI based on CSI sent by the first communications device to the second communications device.

68. The communication device according to claim 60, wherein the first model is used for positioning, and the first model is a model used to determine positioning-related information;
the positioning-related information includes one or more of the following:
location-related information;
time-related information;
angle related information;
energy related information;
line of sight LOS indication information;
non-line-of-sight NLOS indication information.

69. The communication device according to claim 60, wherein the first model is used for beam management, and the first model is a model for determining beam-related information; the beam-related information includes one or more of the following:
beam identifier ID;
beam quality information;
beam sorting information.

70. An information transmission device, comprising:
a second transmitting unit configured to transmit a first signaling to a first communication device, wherein the first signaling is used for monitoring for a target object, and the target object includes a first model and/or a first approach;
a second receiving unit configured to receive a performance report for the target object determined by the first communication device based on the first signaling;
wherein the first model is used for determining and/or feeding back channel state information CSI, or for positioning, or for beam management, or for channel estimation, or for scheduling;
the first approach includes an approach for determining and/or feeding back CSI, or a positioning approach, or a beam management approach, or a channel estimation approach, or a scheduling approach.

71. A processor-readable storage medium, comprising a computer program stored thereon; wherein the computer program is used to cause a processor to execute the method according to any one of claims 1 to 24, or, execute the method according to any one of claims 25 to 36.
